(19)

Europäisches
Patentamt
European
Patent Office
Office européen
des brevets

(11)  **EP 4 787 485 A1**

(12)  # EUROPEAN PATENT APPLICATION
published in accordance with Art. 153(4) EPC

(43) Date of publication:
   **05.08.2026  Bulletin 2026/32**

(21) Application number: **24886255.9**

(22) Date of filing: **30.10.2024**

(51) International Patent Classification (IPC):
   $H01M\ 4/525^{(2010.01)}$      $H01M\ 4/505^{(2010.01)}$
   $H01M\ 4/36^{(2006.01)}$       $C01G\ 53/00^{(2025.01)}$
   $H01M\ 4/131^{(2010.01)}$      $H01M\ 10/0525^{(2010.01)}$
   $H01M\ 4/02^{(2006.01)}$

(52) Cooperative Patent Classification (CPC):
   C01G 53/00; H01M 4/02; H01M 4/131; H01M 4/36;
   H01M 4/505; H01M 4/525; H01M 10/0525;
   Y02E 60/10

(86) International application number:
   **PCT/KR2024/016821**

(87) International publication number:
   **WO 2025/095583 (08.05.2025 Gazette 2025/19)**

(84) Designated Contracting States:
   **AL AT BE BG CH CY CZ DE DK EE ES FI FR GB
   GR HR HU IE IS IT LI LT LU LV MC ME MK MT NL
   NO PL PT RO RS SE SI SK SM TR**
   Designated Extension States:
   **BA**
   Designated Validation States:
   **GE KH MA MD TN**

(30) Priority:  **03.11.2023  KR 20230151124**

(71) Applicant: **LG Chem, Ltd.**
   **Seoul 07336 (KR)**

(72) Inventors:
   • **KIM, Sun Cheol**
     **Daejeon 34122 (KR)**
   • **SEOK, Eun Jeong**
     **Daejeon 34122 (KR)**

   • **HA, Seoung Chul**
     **Daejeon 34122 (KR)**
   • **SHIN, Ye Won**
     **Daejeon 34122 (KR)**
   • **YOU, Min Kyu**
     **Daejeon 34122 (KR)**
   • **KIM, Min Hoon**
     **Daejeon 34122 (KR)**
   • **HEO, Un Seon**
     **Daejeon 34122 (KR)**
   • **LIM, Seung Woo**
     **Daejeon 34122 (KR)**

(74) Representative: **Hoffmann Eitle**
   **Patent- und Rechtsanwälte PartmbB**
   **Arabellastraße 30**
   **81925 München (DE)**

(54)  **CATHODE ACTIVE MATERIAL, METHOD FOR MANUFACTURING SAME, AND CATHODE AND LITHIUM SECONDARY BATTERY COMPRISING SAME**

(57)    The present invention relates to a positive electrode active material having a uniform particle diameter, thereby being capable of improving capacity, initial efficiency, lifespan, and resistance performance of a battery, wherein the positive electrode active material includes a lithium nickel cobalt manganese-based oxide in the form of a single particle doped with Zr and Y, and has a polydispersity index (PDI) value of 1.0 to 2.0 according to Equation 1 described in the present invention, a preparation method thereof, and a positive electrode and a lithium secondary battery including the positive electrode active material.

[FIG. 1]

Example 1 | Comparative example 1
Example 2 | Comparative example 2

EP 4 787 485 A1

**Description**

## TECHNICAL FIELD

### Cross-reference to Related Applications

This application claims the benefit of Korean Patent Application No. 10-2023-0151124, filed on November 3, 2023, in the Korean Intellectual Property Office, the disclosure of which is incorporated herein in its entirety by reference.

### Technical Field

The present invention relates to a positive electrode active material, a preparation method thereof, and a positive electrode and a lithium secondary battery including the positive electrode active material, and more specifically, to a positive electrode active material having a uniform particle diameter, a preparation method thereof, and a positive electrode and a lithium secondary battery including the positive electrode active material.

## BACKGROUND ART

In recent years, as the technology development and demand for mobile devices and electric vehicles have increased, the demand for secondary batteries as an energy source has been rapidly increased. Among such secondary batteries, lithium secondary batteries having high energy density and voltage, long cycle life, and low self-discharging rate have been commercialized and widely used.

As a positive electrode active material for a lithium secondary battery, lithium transition metal oxides such as a lithium cobalt oxide such as $LiCoO_2$, a lithium nickel oxide such as $LiNiO_2$, a lithium manganese oxide such as $LiMnO_2$ or $LiMn_2O_4$, a lithium iron phosphate oxide such as $LiFePO_4$, and the like have been developed, and in recent years, a lithium composite transition metal oxide including two or more types of transition metals such as $Li[Ni_aCo_bMn_c]O_2$, $Li[Ni_aCo_bAl_c]O_2$, and $Li[Ni_aCo_bMn_cAl_d]O_2$ has been developed and widely used.

The lithium composite transition metal oxide including two or more types of transition metals developed up to date is typically prepared in the form of a spherical secondary particle in which tens to hundreds of primary particles are aggregated, and in recent years, in order to solve the structure and thermal stability problem of a positive electrode active material in the form of a secondary particle itself, the development of a positive electrode active material in the form of a single particle has been accelerated. Specifically, when a positive electrode active material in the form of a secondary particle is applied to a lithium secondary battery, there is a problem in that a large amount of gas is generated, thereby causing the volume of the battery to expand, and if the content of nickel in the positive electrode active material is increased to achieve a high capacity, there is also a problem in that the risk of fire increases, and therefore, there is a growing demand for the development of a positive electrode active materials in the form of a single particle having excellent stability.

Meanwhile, as an additive used to improve charge/discharge efficiency and lifespan at a high voltage of a positive electrode active material in the form of a single particle, a metal oxide is generally used (dry-doped) in a powder form. However, in the case of dry doping, the uniformity of particle growth may be inhibited due to the influence of a non-uniform additive.

Therefore, there is a need to develop a positive electrode active material in the form of a single particle having a uniform particle size.

## DISCLOSURE OF THE INVENTION

## TECHNICAL PROBLEM

In order to solve the above-described problem, an object of the present invention is to provide a positive electrode active material in the form of a single particle, the positive electrode active material having a uniform particle size, thereby being capable of improving battery performance.

In addition, another object of the present invention is to provide a preparation method for preparing the positive electrode active material.

In addition, another object of the present invention is to provide a lithium secondary battery having improved performance by including the above-described positive electrode active material.

## TECHNICAL SOLUTION

In order to achieve the above-described objects, the present invention provides a positive electrode active material, a preparation method of the positive electrode active material, a positive electrode, and a lithium secondary battery.

(1) The present invention provides a positive electrode active material including a lithium nickel cobalt manganese-based oxide having a nickel content of 60 mol% or greater among all transition metals, and in the form of a single particle composed of 10 or fewer primary particles, wherein the lithium nickel cobalt manganese-based oxide is doped with zirconium (Zr) and yttrium (Y), and has a polydispersity index (PDI) value of 1.0 to 2.0 according to Equation 1 below.

[Equation 1] PDI = Volume average particle diameter ($\mu$m) of primary particles /Number-average particle diameter ($\mu$m) of primary particles
$\hspace{2cm}$ [Equation 1]

(2) In (1) above, the present invention provides a positive electrode active material, wherein the lithium nickel cobalt manganese-based oxide has a composition represented by Formula 1 below.

[Formula 1] $\quad Li_{1+x}Ni_{a1}Co_{b1}Mn_{c1}Zr_{d1}Y_{e1}M_{f1}O_2$

In Formula 1 above, M is one or more selected from W, Cu, Sr, Mn, Ti, Mg, Mo, B, Sn, Fe, Zn, Si, and Al, and - $0.1 \leq x \leq 0.1$, $0.6 \leq a1 < 1$, $0 < b1 < 0.4$, $0 < c1 < 0.4$, $0 < d1 \leq 0.01$, $0 < e1 \leq 0.01$, $0 \leq f1 \leq 0.1$, and a1+b1+c1+d1+e1+f1=1.

(3) In (1) or (2) above, the present invention provides a positive electrode active material, wherein the lithium nickel cobalt manganese-based oxide is doped with 1,500 ppm to 4,500 ppm of Zr, and 1,500 ppm to 4,500 ppm of Y.

(4) In any one of (1) to (3) above, the present invention provides a positive electrode active material, wherein the primary particles have a volume average particle diameter of 2.4 $\mu$m to 3.0 $\mu$m.

(5) In any one of (1) to (4) above, the present invention provides a positive electrode active material, wherein the primary particles have a number-average particle diameter of 1.2 $\mu$m to 3.0 $\mu$m.

(6) In any one of (1) to (5) above, the present invention provides a positive electrode active material, wherein the positive electrode active material has a $D_{50}$ of 3.5 $\mu$m to 4.1 $\mu$m as measured by using a particle size analyzer (PSA).

(7) In any one of (1) to (6) above, the present invention provides a positive electrode active material, wherein the primary particles have a span (($D_{v,90}-D_{v,10}$)/$D_{v,50}$) value of 0.9 or less.

(8) In any one of (1) to (7) above, the present invention provides a positive electrode active material, wherein the primary particles have a $D_{v,50}$ of 2.2 $\mu$m to 3.2 $\mu$m.

(9) In any one of (1) to (8) above, the present invention provides a positive electrode active material, wherein the positive electrode active material further includes a coating layer formed on the lithium nickel cobalt manganese-based oxide, wherein the coating layer includes Al, W, or a combination thereof.

(10) In (9) above, the present invention provides a positive electrode active material, wherein the content of Al contained in the coating layer is 1,000 ppm to 2,000 ppm with respect to the total weight of the positive electrode active material.

(11) In (9) or (10) above, the present invention provides a positive electrode active material, wherein the content of W contained in the coating layer is 2,000 ppm to 4,000 ppm with respect to the total weight of the positive electrode active material.

(12) The present invention provides a method for preparing a positive electrode active material, the method including (A) mixing a composite transition metal hydroxide having a composition represented by Formula 2 below, a yttrium-containing raw material, and a lithium-containing raw material to prepare a mixture, and (B) under an atmospheric atmosphere, sequentially subjecting the mixture to primary firing at 750 °C to 900 °C, secondary firing at 920 °C to 1,000 °C, and then tertiary firing at 500 °C to 800 °C to prepare a fired product.

[Formula 2] $\quad Ni_{a2}Co_{b2}Mn_{c2}Zr_{d2}M'_{e2}(OH)_2$

In Formula 2 above, M' is one or more selected from W, Cu, Sr, Mn, Y, Ti, Mg, Mo, B, Sn, Fe, Zn, Si, and Al, and $0.6 \leq a2 < 1$, $0 < b2 < 0.4$, $0 < c2 < 0.4$, $0 < d2 \leq 0.01$, $0 \leq e2 \leq 0.1$, and a2+b2+c2+d2+e2=1.

(13) In (12) above, the present invention provides a method for preparing a positive electrode active material, wherein the primary firing is performed for 2 hours to 10 hours.

(14) In (12) or (13) above, the present invention provides a method for preparing a positive electrode active material, wherein the secondary firing is performed for 2 hours to 10 hours.

(15) In (12) to (14) above, the present invention provides a method for preparing a positive electrode active material, wherein the tertiary firing is performed for 2 hours to 10 hours.

(16) In any one of (12) to (15) above, the present invention provides a method for preparing a positive electrode active material, wherein the method further includes (C) finely pulverizing the fired product.

(17) In (16) above, the present invention provides a method for preparing a positive electrode active material, wherein the fine pulverization is performed by vortex flow-type pulverization.

(18) In (17) above, the present invention provides a method for preparing a positive electrode active material, wherein the vortex flow-type pulverization is performed under a pressure of 2.5 bar to 5 bar.

(19) In any one of (12) to (18) above, the present invention provides a method for preparing a positive electrode active material, wherein the method further includes (C') mixing the fired product with one or more selected from an aluminum raw material, and a tungsten raw material, and then heat-treating the mixture, thereby forming a coating layer containing one or more selected from Al and W on the fired product.

(20) The present invention provides a positive electrode including the positive electrode active material according to any one of (1) to (11) above.

(21) The present invention provides a lithium secondary battery including the positive electrode according to (20) above, a negative electrode, a separator interposed between the positive electrode and the negative electrode, and an electrolyte.

## ADVANTAGEOUS EFFECTS

A positive electrode active material of the present invention includes a lithium nickel cobalt manganese-based oxide (lithium composite transition metal oxide) in the form of a single particle doped with Zr and Y, and has a polydispersity index value satisfying a specific range according to Equation 1 described in the present specification, so that the breakage of positive electrode active material particles is reduced during roll-pressing for the manufacture of a lithium secondary battery, thereby improving the capacity, initial efficiency, lifespan, and resistance performance of the lithium secondary battery.

In addition, according to a method for preparing a positive electrode active material of the present invention, the above-described positive electrode active material may be effectively prepared.

A positive electrode and a lithium secondary battery according to the present invention may be excellent in capacity, initial efficiency, lifespan, and resistance performance.

## BRIEF DESCRIPTION OF THE DRAWINGS

FIG. 1 shows SEM images (5,000×) of positive electrode active materials respectively prepared in Examples 1 and 2, and Comparative Example 1 and 2.

FIG. 2 is a drawing showing SEM images (5,000 ×) of positive electrode active materials respectively prepared in Examples 1 and 2, and Comparative Examples 1 and 2, which are image-processed to divide and show boundaries of primary particles in random colors.

## BEST MODE FOR CARRYING OUT THE INVENTION

Hereinafter, the present invention will be described in more detail to facilitate understanding of the present invention.

It will be understood that terms or words used in the present specification and claims shall not be construed as being limited to having meanings defined in commonly used dictionaries, but should be interpreted as having meanings and concepts consistent with the technical idea of the present invention based on the principle that an inventor may appropriately define concepts of the terms to best explain the invention.

In the present specification, it should be understood that the term 'include,' 'comprise,' or 'have' is intended to specify the presence of stated features, numbers, steps, elements, or combinations thereof, but do not preclude the presence or addition of one or more other features, numbers, steps, elements, or combinations thereof.

In the present specification, the term 'on' includes not only a case in which a certain component is formed directly on an upper surface of another component, but also a case in which a third component is interposed therebetween.

In the present specification, a 'single particle form' is a concept in contrast to a spherical secondary particle form which is formed by the aggregation of tens to hundreds of primary particles manufactured by a typical method, and means a form composed of 10 or fewer primary particles. Specifically, in the present invention, the single particle form may be a single particle composed of one primary particle, or may be a secondary particle form in which two to ten primary particles are aggregated.

The 'primary particle' means the minimum unit of particles recognized when observing a positive electrode active material through a scanning electron microscope, and the 'secondary particle' means a secondary structural body formed by the aggregation of a plurality of primary particles.

In the present specification, a 'volume average particle diameter of primary particles' is a value according to Equation 2 below, and is a value derived by calculating the area of each of the primary particles through the number of pixels corresponding to each of n primary particles present in an SEM image, using a radius ($r_i$) of a circle having the same area as the area of each of the primary particles, thereby calculating a particle diameter ($D_i=2r_i$) and a volume ($V_i=4/3\times\pi r_i^3$) of each of the primary particles present in the SEM image, and dividing the total sum of values ($V_iD_i$), which is obtained by multiplying the volume and the particle diameter calculated for each primary particle, by the total sum of the volumes ($V_i$) calculated.

[Equation 2]

Volume average particle diameter of primary particles

$$= \frac{\sum_{i=1}^{n} V_i D_i}{\sum_{i=1}^{n} V_i}$$

In Equation 2 above, n is the number of primary particles present in an SEM image, $V_i$ is the volume of one primary particle among n primary particles, and $V_iD_i$ is a value obtained by multiplying the volume ($V_i$) and the particle diameter ($D_i$) of one primary particle among n primary particles.

In the present specification, a 'number-average particle diameter of primary particles' is a value according to Equation 3 below, and is a value derived by calculating the area of each of the primary particles through the number of pixels corresponding to each of n primary particles present in an SEM image, using a radius ($r_i$) of a circle having the same area as the area of each of the primary particles, thereby calculating a particle diameter ($D_i=2r_i$) of each of the primary particles present in the SEM image, and dividing the total sum of the calculated particle diameters by the number of the primary particles.

[Equation 3]

Number-average particle diameter of primary particles

$$= \frac{\sum_{i=1}^{n} D_i}{n}$$

In Equation 3 above, n is the number of primary particles present in an SEM image, and $D_i$ is a particle diameter ($D_i$) of one primary particle among n primary particles.

In the present specification, the '$D_{50}$ as measured by using a particle size analyzer (PSA)' means a particle diameter at a point of 50% in a volume cumulative distribution according to a particle diameter. The $D_{50}$ may be measured by dispersing powder to be measured in a dispersion medium, and then introducing the mixture into a commercially available laser diffraction particle size measurement device (for example, S3500 of Microtrac Co., Ltd.) to calculate a particle size distribution by measuring the difference in diffraction pattern according to a particle size when particles pass through a laser beam, and then calculating the particle diameter at a point of 50% in a volume cumulative distribution according to a particle diameter in the measurement device.

In the present specification, '$D_{v,10}$, $D_{v,50}$, and $D_{v,90}$' of primary particles may be obtained by calculating the area of each of the primary particles through the number of pixels corresponding to each of n primary particles present in an SEM image, using a radius of a circle having the same area as the area of each of the primary particles, thereby calculating the particle diameter and the volume of each of the primary particles present on the SEM image, and calculating particle diameters at points of 10%, 50%, and 90% in a volume cumulative distribution according to a particle diameter. In addition, a span value of a primary particle is a value obtained by substituting the above '$D_{v,10}$, $D_{v,50}$, and $D_{v,90}$' into $(D_{v,90}-D_{v,10})/D_{v,50}$.

Positive electrode active material

The present invention provides a positive electrode active material including a lithium nickel cobalt manganese-based oxide having a nickel content of 60 mol% or greater among all transition metals, and in the form of a single particle composed of 10 or fewer primary particles, wherein the lithium nickel cobalt manganese-based oxide is doped with zirconium (Zr) and yttrium (Y), and has a polydispersity index (PDI) value of 1 to 2.0 according to Equation 1 below. The lithium nickel cobalt manganese-based oxide may have a layered structure.

[Equation 1] PDI = Volume average particle diameter ($\mu$ m) of primary particles /Number-average particle diameter ($\mu$ m) of primary particles

[Equation 1]

The present inventors have found that if a positive electrode active material includes the above-described lithium nickel cobalt manganese-based oxide in the form of a single particle doped with Zr and Y, and has a polydispersity index (PDI) value satisfying a specific range according to Equation 1 above, the breakage of the positive electrode active material particles may be reduced during roll-pressing for the manufacture of a lithium secondary battery, thereby improving the capacity, initial efficiency, lifespan, and resistance performance of the lithium secondary battery, and have completed the present invention.

According to the present invention, the lithium nickel cobalt manganese-based oxide may have a nickel content of 60 mol% or greater among all transition metals. Specifically, the lithium nickel cobalt manganese-based oxide may include 60 mol% or greater, or 61 mol% or greater of nickel with respect to the total number of moles of metals excluding lithium. That is, the lithium nickel cobalt manganese-based oxide may be a high-nickel-based lithium composite transition metal oxide. In this case, the energy density of a lithium secondary battery may be improved.

According to the present invention, the lithium nickel cobalt manganese-based oxide is doped with Zr and Y. In this case, the particle shape is improved and structurally stabilized, so that high-capacity properties and a high energy density per unit volume may be implemented.

Meanwhile, when the lithium nickel cobalt manganese-based oxide is not doped with Zr, structural stability relatively decreases during intercalation and deintercalation of lithium, so that the lifespan performance of a lithium secondary battery may be problematic, and when not doped with Y, firing at a higher temperature is required for the growth of particles, and as a result, there is a problem in that the resistance of a positive electrode active material to be prepared as a result increases.

According to the present invention, the positive electrode active material has a polydispersity index (PDI) value of 1.0 to 2.0 according to Equation 1. Theoretically, if all primary particles constituting the lithium nickel cobalt manganese-based oxide have the same particle diameter, a polydispersity index (PDI) value is 1.0, and the more uniform the particle diameter, the closer the value is to 1.0. The polydispersity index value may specifically be 1.0 or greater, 1.1 or greater, 1.2 or greater, 1.3 or greater, 1.4 or greater, 1.5 or greater, 1.6 or greater, 1.7 or greater, or 1.8 or greater, and 1.9 or less, or 2.0 or less. If the polydispersity index value satisfies the above-described range, it can be seen that the primary particles have grown very uniformly, and accordingly, local deterioration of the positive electrode active material is prevented, thereby improving the performance (capacity, initial efficiency, lifespan, resistance performance, etc.) of a battery. The polydispersity index value is determined by a combination of the preparation method and composition of a positive electrode active material, the type of a doping element, the size and particle size distribution of primary particles, and the like, and is not determined by any one factor.

Meanwhile, if the polydispersity index value of the positive electrode active material is greater than 2.0, the primary particle size is not uniform, resulting in an increase in the breakage of the positive electrode active material particles during roll-pressing for the manufacture of a lithium secondary battery, so that there is a problem in that the resistance and lifespan performance of the lithium secondary battery are degraded.

According to the present invention, the lithium nickel cobalt manganese-based oxide may have a composition represented by Formula 1 below.

[Formula 1] $\quad\quad$ $Li_{1+x}Ni_{a1}Co_{b1}Mn_{c1}Zr_{d1}Y_{e1}M_{f1}O_2$

In Formula 1 above, M is one or more selected from W, Cu, Sr, Mn, Ti, Mg, Mo, B, Sn, Fe, Zn, Si, and Al, and - $0.1 \leq x \leq 0.1$, $0.6 \leq a1 < 1$, $0 < b1 < 0.4$, $0 < c1 < 0.4$, $0 < d1 \leq 0.01$, $0 < e1 \leq 0.01$, $0 \leq f1 \leq 0.1$, and $a1+b1+c1+d1+e1+f1=1$.

The x above may be -0.1 or greater, -0.09 or greater, -0.08 or greater, -0.07 or greater, -0.06 or greater, -0.05 or greater, -0.04 or greater, -0.03 or greater, -0.02 or greater, -0.01 or greater, 0 or greater, 0.01 or greater, 0.02 or greater, 0.03 or greater, or 0.04 or greater, and 0.05 or less, 0.06 or less, 0.07 or less, 0.08 or less, 0.09 or less, or 0.1 or less. When the x satisfies the above-described range, high-capacity properties and a high energy density per unit volume may be implemented.

According to the present invention, in Formula 1 above, the a1 represents the atomic fraction of nickel among metal elements in the lithium nickel cobalt manganese-based oxide, and may be 0.6 or greater, or 0.61 or greater, and 0.7 or less, 0.71 or less, 0.72 or less, 0.73 or less, 0.74 or less, 0.75 or less, 0.76 or less, 0.77 or less, 0.78 or less, 0.79 or less, 0.8 or less, 0.81 or less, 0.82 or less, 0.83 or less, 0.84 or less, 0.85 or less, 0.86 or less, 0.87 or less, 0.88 or less, 0.89 or less, 0.9 or less, 0.91 or less, 0.92 or less, 0.93 or less, 0.94 or less, 0.95 or less, 0.96 or less, 0.97 or less, 0.98 or less, 0.99 or less, or less than 1. When the a1 satisfies the above-described range, high-capacity properties may be implemented, and particularly, if the a1 is 0.6 to 0.75, a high energy density is exhibited during high-voltage driving, so that high-capacity properties may be implemented.

According to the present invention, in Formula 1 above, the b1 represents the atomic fraction of cobalt among metal elements in the lithium nickel cobalt manganese-based oxide, and may be greater than 0, 0.01 or greater, 0.02 or greater, 0.03 or greater, 0.04 or greater, or 0.05 or greater, and 0.10 or less, 0.11 or less, 0.12 or less, 0.13 or less, 0.14 or less, 0.15 or less, 0.16 or less, 0.17 or less, 0.18 or less, 0.19 or less, 0.20 or less, 0.21 or less, 0.22 or less, 0.23 or less, 0.24 or less, 0.25 or less, 0.26 or less, 0.27 or less, 0.28 or less, 0.29 or less, 0.30 or less, 0.31 or less, 0.32 or less, 0.33 or less, 0.34 or less, 0.35 or less, 0.36 or less, 0.37 or less, 0.38 or less, 0.39 or less, or less than 0.4. When the b1 satisfies the above-described range, stability may be improved during charging and discharging, and rate properties may be improved.

According to the present invention, in Formula 1 above, the c1 represents the atomic fraction of manganese among metal elements in the lithium nickel cobalt manganese-based oxide, and may be greater than 0, 0.01 or greater, 0.02 or greater, 0.03 or greater, 0.04 or greater, 0.05 or greater, 0.06 or greater, 0.07 or greater, 0.08 or greater, 0.09 or greater, 0.1 or greater, 0.11 or greater, 0.12 or greater, 0.13 or greater, 0.14 or greater, 0.15 or greater, 0.16 or greater, 0.17 or greater, 0.18 or greater, 0.19 or greater, 0.2 or greater, 0.21 or greater, 0.22 or greater, 0.23 or greater, 0.24 or greater, 0.25 or greater, 0.26 or greater, 0.27 or greater, 0.28 or greater, 0.29 or greater, or 0.30 or greater, and 0.32 or less, 0.33 or less, 0.34 or less, 0.35 or less, 0.36 or less, 0.37 or less, 0.38 or less, 0.39 or less, or less than 0.4. When the c1 satisfies the above-described range, high-capacity properties may be implemented. In addition, high-temperature stability may increase, and a side reaction with an electrolyte solution may relatively decrease.

According to the present invention, in Formula 1 above, the d1 represents the atomic fraction of zirconium among metal elements in the lithium nickel cobalt manganese-based oxide, and may be 0 or greater, 0.001 or greater, 0.002 or greater, or 0.003 or greater, and 0.004 or less, 0.005 or less, 0.006 or less, 0.007 or less, 0.008 or less, 0.009 or less, or 0.01 or less. When the d1 satisfies the above-described range, the crystal structure stability of a positive electrode active material may be improved, and the resistance and lifespan of a battery may be improved due to an increase in the structure stability.

According to the present invention, in Formula 1 above, the e1 represents the atomic fraction of yttrium among metal elements in the lithium nickel cobalt manganese-based oxide, and may be 0 or greater, or 0.001 or greater, and 0.002 or less, 0.003 or less, 0.004 or less, 0.005 or less, 0.006 or less, 0.007 or less, 0.008 or less, 0.009 or less, or 0.01 or less. When the e1 satisfies the above-described range, the growth of particles may be improved, so that the capacity and lifespan may be improved.

According to the present invention, in Formula 1 above, the f1 represents the atomic fraction of an M element among metal elements in the lithium nickel cobalt manganese-based oxide, and may be 0 or greater, and 0.01 or less, 0.02 or less, 0.03 or less, 0.04 or less, 0.05 or less, 0.06 or less, 0.07 or less, 0.08 or less, 0.09 or less, or 0.10 or less. When the f1 satisfies the above-described range, the crystal structure stability of a positive electrode active material may be improved, and the particle shape may be improved.

According to the present invention, the lithium nickel cobalt manganese-based oxide is doped with 1,500 ppm to 4,500 ppm of Zr, and 1,500 ppm to 4,500 ppm of Y.

The content of Zr may specifically be, with respect to the total weight of the lithium nickel cobalt manganese-based oxide, 1,500 ppm or greater, 1,600 ppm or greater, 1,700 ppm or greater, 1,800 ppm or greater, 1,900 ppm or greater, 2,000 ppm or greater, 2,100 ppm or greater, 2,200 ppm or greater, 2,300 ppm or greater, 2,400 ppm or greater, 2,500 ppm or greater, 2,600 ppm or greater, 2,700 ppm or greater, 2,800 ppm or greater, or 2,900 ppm or greater, and 3,000 ppm or less, 3,100 ppm or less, 3,200 ppm or less, 3,300 ppm or less, 3,400 ppm or less, 3,500 ppm or less, 3,600 ppm or less, 3,700 ppm or less, 3,800 ppm or less, 3,900 ppm or less, 4,000 ppm or less, 4,100 ppm or less, 4,200 ppm or less, 4,300 ppm or less, 4,400 ppm or less, or 4,500 ppm or less.

The content of Y may specifically be, with respect to the total weight of the lithium nickel cobalt manganese-based oxide, 1,500 ppm or greater, 1,600 ppm or greater, 1,700 ppm or greater, 1,800 ppm or greater, 1,900 ppm or greater, 2,000 ppm or greater, 2,100 ppm or greater, 2,200 ppm or greater, 2,300 ppm or greater, or 2,400 ppm or greater, and 2,500 ppm or less, 2,600 ppm or less, 2,700 ppm or less, 2,800 ppm or less, 2,900 ppm or less, 3,000 ppm or less, 3,100 ppm or less, 3,200 ppm or less, 3,300 ppm or less, 3,400 ppm or less, 3,500 ppm or less, 3,600 ppm or less, 3,700 ppm or less, 3,800 ppm or less, 3,900 ppm or less, 4,000 ppm or less, 4,100 ppm or less, 4,200 ppm or less, 4,300 ppm or less, 4,400 ppm or less, or 4,500 ppm or less.

If the content of Y is within the above-described range, due to the influence of the Y, the particle growth is promoted, thereby increasing the grain size and size of the primary particles, so that the capacity and lifespan performance of a battery may be improved, and if the content of Zr is within the above-described range, the Zr is stably doped on a transition metal layer, thereby improving structural stability during the intercalation and deintercalation of lithium, and as a result, the particle strength is excellent, so that the lifespan and resistance performance of a battery may be improved.

According to the present invention, the primary particles may have a volume average particle diameter of 2.4 $\mu$m to 3.0 $\mu$m. The volume average particle diameter of the primary particles may specifically be 2.4 $\mu$m or greater, or 2.5 $\mu$m or greater, and 2.7 $\mu$m or less, 2.8 $\mu$m or less, 2.9 $\mu$m or less, or 3.0 $\mu$m or less. If the volume average particle diameter of primary particles is within the above-described range, it is advantageous in moving lithium, so that the charge/discharge capacity and efficiency of a battery may be improved, and the lifespan performance may be improved.

According to the present invention, the primary particles may have a number average particle diameter of 1.2 $\mu$m to 3.0 $\mu$m. The number average particle diameter of the primary particles may specifically be 1.2 $\mu$m or greater, or 1.3 $\mu$m or greater, and 1.5 $\mu$m or less, 1.6 $\mu$m or less, 1.7 $\mu$m or less, 1.8 $\mu$m or less, 1.9 $\mu$m or less, 2.0 $\mu$m or less, 2.1 $\mu$m or less, 2.2 $\mu$m or less, 2.3 $\mu$m or less, 2.4 $\mu$m or less, 2.5 $\mu$m or less, 2.6 $\mu$m or less, 2.7 $\mu$m or less, 2.8 $\mu$m or less, 2.9 $\mu$m or less, or 3.0 $\mu$m or less. When the number average particle diameter of primary particles is within the above-described range, the ratio of small particles (primary particles having a particle diameter of less than 1 $\mu$m) involved in lifespan performance decreases, so that the lifespan performance may be improved.

According to the present invention, the positive electrode active material may have a $D_{50}$ of 3.5 $\mu$m to 4.1 $\mu$m as measured by using a particle size analyzer (PSA). The average particle diameter ($D_{50}$) of the positive electrode active material may specifically be 3.50 $\mu$m or greater, 3.60 $\mu$m or greater, 3.70 $\mu$m or greater, or 3.80 $\mu$m or greater, and 3.90 $\mu$m or less, 4.00 $\mu$m or less, or 4.10 $\mu$m or less. If the $D_{50}$ of a positive electrode active material as measured by using a particle size analyzer (PSA) is within the above-described range, both the lifespan and capacity properties of a battery including the positive electrode active material may be improved, so that the electrochemical performance may be optimized. For reference, if the $D_{50}$ is less than 3.5 $\mu$m, the lifespan of the battery may be reduced, and if the $D_{50}$ is greater than 4.1 $\mu$m, the capacity of the battery may be reduced.

According to the present invention, the primary particles may have a span $((D_{v,90}-D_{v,10})/D_{v,50})$ value of 0.9 or less. The span value of the primary particles may specifically be 0 or greater, 0.10 or greater, 0.20 or greater, 0.30 or greater, 0.40 or greater, 0.50 or greater, 0.60 or greater, 0.70 or greater, or 0.80 or greater, and 0.82 or less, 0.83 or less, 0.84 or less, 0.85 or less, 0.86 or less, 0.87 or less, 0.88 or less, 0.89 or less, or 0.90 or less. If the span value of primary particles is within the above-described range, it may be determined that the distribution of particle diameter is uniform and the lifespan performance may be improved due to uniform particle growth.

According to the present invention, the $D_{v,50}$ of the primary particles may be 2.2 $\mu$m to 3.2 $\mu$m. The $D_{v,50}$ of the primary particles may specifically be 2.20 $\mu$m or greater, 2.25 $\mu$m or greater, 2.30 $\mu$m or greater, 2.35 $\mu$m or greater, 2.40 $\mu$m or greater, 2.45 $\mu$m or greater, 2.50 $\mu$m or greater, or 2.55 $\mu$m or greater, and 2.70 $\mu$m or less, 2.75 $\mu$m or less, 2.80 $\mu$m or less, 2.85 $\mu$m or less, 2.90 $\mu$m or less, 2.95 $\mu$m or less, 3.00 $\mu$m or less, 3.05 $\mu$m or less, 3.10 $\mu$m or less, 3.15 $\mu$m or less, or 3.20 $\mu$m or less. If the $D_{v,50}$ of primary particles is within the above-described range, it is advantageous in moving lithium, so that the charge/discharge capacity and efficiency may be improved, and the lifespan performance may be improved.

According to the present invention, the positive electrode active material may further include a coating layer formed on the lithium nickel cobalt manganese-based oxide, wherein the coating layer may include Al, W, or a combination thereof. In this case, the electrical conductivity of the positive electrode active material is improved, and a side reaction with an electrolyte solution in a battery is suppressed, so that the capacity properties, resistance properties, lifespan properties, and the like of a battery may be improved. Specifically, the generation of a by-product in the form of hydrogen fluoride, which may be produced by a side reaction with an electrolyte solution in the battery, is suppressed, so that high-capacity properties at a high rate may be exhibited.

According to the present invention, the content of Al contained in the coating layer may be 1,000 ppm to 2,000 ppm with respect to the total weight of the positive electrode active material. The content of Al may specifically be, with respect to the total weight of the positive electrode active material, 1,000 ppm or greater, 1,100 ppm or greater, 1,200 ppm or greater, or 1,300 ppm or greater, and 1,400 ppm or less, 1,500 ppm or less, 1,600 ppm or less, 1,700 ppm or less, 1,800 ppm or less, 1,900 ppm or less, or 2,000 ppm or less. In this case, the electrical conductivity of the positive electrode active material is improved, and the generation of by-products formed by a side reaction with an electrolyte solution in a battery is suppressed, so that the capacity properties, resistance properties, lifespan properties, and the like of the positive electrode active material may be improved.

According to the present invention, the content of W contained in the coating layer may be 2,000 ppm to 4,000 ppm with respect to the total weight of the positive electrode active material. The content of W may specifically be, with respect to the total weight of the positive electrode active material, 2,000 ppm or greater, 2,100 ppm or greater, or 2,200 ppm or greater, and 2,500 ppm or less, 2,600 ppm or less, 2,700 ppm or less, 2,800 ppm or less, 2,900 ppm or less, 3,000 ppm or less , 3,100 ppm or less, 3,200 ppm or less, 3,300 ppm or less, 3,400 ppm or less, 3,500 ppm or less, 3,600 ppm or less, 3,700 ppm or less, 3,800 ppm or less, 3,900 ppm or less, or 4,000 ppm or less. In this case, the electrical conductivity of the positive electrode active material is improved, and the generation of by-products formed by a side reaction with an electrolyte solution in a battery is suppressed, so that the capacity properties, resistance properties, lifespan properties, and the like of the positive electrode active material may be improved.

## Method for preparing positive electrode active material

The present invention provides a method for preparing the above-described positive electrode active material. That is, the positive electrode active material according to the present invention is prepared by the following method for preparing a positive electrode active material.

A method for preparing a positive electrode active material in the form of a single particle according to the present invention includes (A) mixing a composite transition metal hydroxide having a composition represented by Formula 2 below, a yttrium-containing raw material, and a lithium-containing raw material to prepare a mixture, and (B) under an atmospheric atmosphere, sequentially subjecting the mixture to primary firing at 750 °C to 900 °C, secondary firing at 920 °C to 1,000 °C, and then tertiary firing at 500 °C to 800 °C to prepare a fired product.

$$[Formula\ 2] \qquad Ni_{a2}Co_{b2}Mn_{c2}Zr_{d2}M'_{e2}(OH)_2$$

In Formula 2 above, M' is one or more selected from W, Cu, Sr, Mn, Y, Ti, Mg, Mo, B, Sn, Fe, Zn, Si, and Al, and $0.6 \leq a2 < 1$, $0 < b2 < 0.4$, $0 < c2 < 0.4$, $0 < d2 \leq 0.01$, $0 \leq e2 \leq 0.1$, and $a2+b2+c2+d2+e2=1$.

The present inventors have found that if a mixture obtained by mixing a composite transition metal hydroxide containing Ni, Co, Mn, and Zr with a yttrium-containing raw material and a lithium-containing raw material is sequentially subjected to primary firing at 750 °C to 900 °C, secondary firing at 920 °C to 1,000 °C, and then tertiary firing at 500 °C to 800 °C, a positive electrode active material in the form of a single particle and having a uniform particle diameter of primary particles is prepared, so that the breakage of positive electrode active material particles is reduced during roll-pressing for the manufacture of a lithium secondary battery, and have completed the present invention.

**Step (A)**

Step (A) above is a step of preparing a mixture by mixing a positive electrode active material precursor having a composition represented by Formula 2 above, a yttrium-containing raw material, and a lithium-containing raw material.

According to the present invention, in Formula 2 above, the a2 represents the atomic fraction of nickel among metal elements in the composite transition metal hydroxide, and may be 0.6 or greater, or 0.61 or greater, and 0.7 or less, 0.71 or less, 0.72 or less, 0.73 or less, 0.74 or less, 0.75 or less, 0.76 or less, 0.77 or less, 0.78 or less, 0.79 or less, 0.8 or less, 0.81 or less, 0.82 or less, 0.83 or less, 0.84 or less, 0.85 or less, 0.86 or less, 0.87 or less, 0.88 or less, 0.89 or less, 0.9 or less, 0.91 or less, 0.92 or less, 0.93 or less, 0.94 or less, 0.95 or less, 0.96 or less, 0.97 or less, 0.98 or less, 0.99 or less, or less than 1. When the a2 satisfies the above-described range, high-capacity properties of a battery including a positive electrode active material to be prepared as a result may be implemented, and particularly, if the a2 is 0.6 to 0.75, a battery including a positive electrode active material to be prepared as a result may exhibit a high energy density during high-voltage driving, so that high-capacity properties may be implemented.

According to the present invention, in Formula 2 above, the b2 represents the atomic fraction of cobalt among metal elements in the composite transition metal hydroxide, and may be greater than 0, 0.01 or greater, 0.02 or greater, 0.03 or greater, 0.04 or greater, or 0.05 or greater, and 0.10 or less, 0.11 or less, 0.12 or less, 0.13 or less, 0.14 or less, 0.15 or less, 0.16 or less, 0.17 or less, 0.18 or less, 0.19 or less, 0.20 or less, 0.21 or less, 0.22 or less, 0.23 or less, 0.24 or less, 0.25 or less, 0.26 or less, 0.27 or less, 0.28 or less, 0.29 or less, 0.30 or less, 0.31 or less, 0.32 or less, 0.33 or less, 0.34 or less, 0.35 or less, 0.36 or less, 0.37 or less, 0.38 or less, 0.39 or less, or less than 0.4. When the b2 satisfies the above-described range, stability in a process of charging and discharging a battery including a positive electrode active material to be prepared as a result may be improved, and rate properties may be improved.

According to the present invention, in Formula 2 above, the c2 represents the atomic fraction of manganese among metal elements in the composite transition metal hydroxide, and may be greater than 0, 0.01 or greater, 0.02 or greater, 0.03 or greater, 0.04 or greater, 0.05 or greater, 0.06 or greater, 0.07 or greater, 0.08 or greater, 0.09 or greater, 0.1 or greater, 0.11 or greater, 0.12 or greater, 0.13 or greater, 0.14 or greater, 0.15 or greater, 0.16 or greater, 0.17 or greater, 0.18 or greater, 0.19 or greater, 0.2 or greater, 0.21 or greater, 0.22 or greater, 0.23 or greater, 0.24 or greater, 0.25 or greater, 0.26 or greater, 0.27 or greater, 0.28 or greater, 0.29 or greater, or 0.30 or greater, and 0.32 or less, 0.33 or less, 0.34 or less, 0.35 or less, 0.36 or less, 0.37 or less, 0.38 or less, 0.39 or less, or less than 0.4. When the c2 satisfies the above-described range, high-capacity properties of a battery including a positive electrode active material to be prepared as a result may be implemented. In addition, high-temperature stability of the battery may increase, and a side reaction with an electrolyte solution may relatively decrease.

According to the present invention, in Formula 2 above, the d2 represents the atomic fraction of zirconium among metal elements in the composite transition metal hydroxide, and may be 0 or greater, 0.001 or greater, 0.002 or greater, or 0.003 or greater, and 0.004 or less, 0.005 or less, 0.006 or less, 0.007 or less, 0.008 or less, 0.009 or less, or 0.01 or less. When the d2 satisfies the above-described range, the crystal structure stability of a positive electrode active material to be prepared may be improved, and the resistance and lifespan of a battery may be improved due to an increase in the structure stability.

According to the present invention, in Formula 2 above, the e2 represents the atomic fraction of an M' element among metal elements in the composite transition metal hydroxide, and may be 0 or greater, and 0.01 or less, 0.02 or less, 0.03 or less, 0.04 or less, 0.05 or less, 0.06 or less, 0.07 or less, 0.08 or less, 0.09 or less, or 0.10 or less. When the e2 satisfies the above-described range, the crystal structure stability of a positive electrode active material to be prepared as a result may be improved, and the particle shape may be improved.

The composite transition metal hydroxide may be prepared by subjecting a composite transition metal-containing solution containing Ni, Co, Mn, and Zr, a basic aqueous solution, and an ammonium cation complex forming agent to a co-precipitation reaction. Specifically, a composite transition metal hydroxide, which is a positive electrode active material precursor, may be prepared by performing a co-precipitation reaction while introducing a reaction solution including a composite transition metal-containing solution, a basic aqueous solution, and an ammonium cation complex forming agent into a reactor.

The composite transition metal-containing solution includes cations of Ni, Co, Mn, and Zr metals. The composite transition metal-containing solution may include an acetate, a nitrate, a sulfate, a halide, a sulfide, a hydroxide, an oxide, an oxyhydroxide, or the like of the above-described metals, and is not particularly limited as long as it can be dissolved in water.

The basic aqueous solution may include one or more selected from a hydrate of an alkali metal, a hydroxide of an alkali metal, a hydrate of an alkaline earth metal, and a hydroxide of an alkaline earth metal. For example, the basic aqueous solution may include NaOH, KOH, $Ca(OH)_2$, or the like, and as a solvent, water, or a mixture of an organic solvent which may be uniformly mixed with water and water may be used.

The ammonium cation complex forming agent may include one or more selected from $NH_4OH$, $(NH_4)_2SO_4$, $NH_4NO_3$, $NH_4Cl$, $CH_3COONH_4$, and $NH_4CO_3$. As the solvent, water, or a mixture of an organic solvent (specifically, an alcohol, etc.) which may be uniformly mixed with water and water may be used.

The co-precipitation reaction may be performed for 1 hours to 50 hours. Specifically, the co-precipitation reaction may be performed for 1 hour or more, 5 hours or more, 10 hours or more, 11 hours or more, 12 hours or more, 13 hours or more, 14 hours or more, 15 hours or more, 16 hours or more, 17 hours or more, 18 hours or more, 19 hours or more, or 20 hours or more, and 30 hours or less, 31 hours or less, 32 hours or less, 33 hours or less, 34 hours or less, 35 hours or less, 36 hours or less, 37 hours or less, 38 hours or less, 39 hours or less, 40 hours or less, 45 hours or less, or 50 hours or less. If the co-precipitation reaction is performed for a period of time within the above-described range above, the crystallinity of particles of the composite transition metal hydroxide may be controlled to a sufficient degree.

In this case, the basic aqueous solution may be introduced in an amount such that the pH of the reaction solution is to be within a desired range. The co-precipitation reaction may be performed at a pH of 10 to 13. Specifically, the co-precipitation reaction may be performed at a pH of 10 or higher, a pH of 10.5 or higher, a pH of 11 or higher, or a pH of 11.5 or higher, and a pH of 12 or lower, a pH of 12.5 or lower, a pH of 12.7 or lower, or a pH of 13 or lower.

When the composite transition metal hydroxide particles are formed by the above-described method, the particles are separated from the reaction solution to obtain a composite transition metal hydroxide. Specifically, the reaction solution may be filtered to separate the particles from the reaction solution, and then the separated particles may be washed with water and dried to obtain a composite transition metal hydroxide. In this case, if necessary, a process such as pulverization and/or classification may be performed.

According to the present invention, the yttrium (Y)-containing raw material may be one or more selected from $YCl_3$, $Y_2O_3$, $Y(NO_3)_3$, $Y(OH)_3$, YSZ, $Y_2(SO4)_3$, and $Y_2S_3$, specifically, one or more selected from $Y_2O_3$, $Y(NO_3)_3$, and $Y(OH)_3$, and more specifically, $Y_2O_3$. The yttrium-containing raw material may be added in an amount such that yttrium is 1,500 ppm to 4,500 ppm with respect to the total weight of the composite transition metal hydroxide. Specifically, the yttrium-containing raw material may be added in an amount such that yttrium is, with respect to the total weight of the composite transition metal hydroxide, 1,500 ppm or greater, 1,600 ppm or greater, 1,700 ppm or greater, 1,800 ppm or greater, 1,900 ppm or greater, 2,000 ppm or greater, 2,100 ppm or greater, 2,200 ppm or greater, 2,300 ppm or greater, 2,400 ppm or greater, 2,500 ppm or greater, 2,600 ppm or greater, 2,700 ppm or greater, 2,800 ppm or greater, or 2,900 ppm or greater, and 3,000 ppm or less, 3,100 ppm or less, 3,200 ppm or less, 3,300 ppm or less, 3,400 ppm or less, 3,500 ppm or less, 3,600 ppm or less, 3,700 ppm or less, 3,800 ppm or less, 3,900 ppm or less, 4,000 ppm or less, 4,100 ppm or less, 4,200 ppm or less, 4,300 ppm or less, 4,400 ppm or less, or 4,500 ppm or less. In this case, the size of grains included in one particle is large, so that the capacity and lifespan performance of a battery may be further improved.

According to the present invention, the lithium-containing raw material may be a sulfate, a nitrate, an acetate, a carbonate, an oxalate, a citrate, a halide, a hydroxide, an oxyhydroxide, or the like, which contains lithium, and is not particularly limited as long as it can be dissolved in water. Specifically, the lithium-containing raw material may be $Li_2CO_3$, $LiNO_3$, $LiNO_2$, $LiOH$, $LiOH \cdot H_2O$, $LiH$, $LiF$, $LiCl$, $LiBr$, $LiI$, $CH_3COOLi$, $Li_2O$, $Li_2SO_4$, $CH_3COOLi$, $Li_3C_6H_5O_7$, or the like, and any one thereof or a mixture of two or more thereof may be used.

According to the present invention, the composite transition metal hydroxide and the lithium-containing raw material may be mixed such that a ratio (M:Li) of the total number of moles (M) of transition metals included in the composite transition metal hydroxide to the number of moles of lithium (Li) included in the lithium-containing raw material is to be 1:1.0 to 1.1, 1:1.01 to 1.09, 1:1.02 to 1.08, 1:1.03 to 1.07, 1:1.04 to 1.07, or 1:1.05 to 1.07.

**Step (B)**

Step (B) above is a step of, under an atmospheric atmosphere, sequentially subjecting the mixture to primary firing at 750 °C to 900 °C, secondary firing at 920 °C to 1,000 °C, and then tertiary firing at 500 °C to 800 °C to prepare a fired product.

According to the present invention, when the mixture is subjected to primary firing at 750°C to 900°C, a reaction occurs between the lithium-containing raw material and the composite transition metal hydroxide, thereby causing a change in crystal structure, so that polycrystalline secondary particles having a small primary particle size are prepared. The primary firing temperature may specifically be 750 °C or higher, 760 °C or higher, 770 °C or higher, 780 °C or higher, 790 °C or higher, 800 °C or higher, 810 °C or higher, 820 °C or higher, 830 °C or higher, 840 °C or higher, or 850 °C or higher, and 860 °C or lower, 870 °C or lower, 880 °C or lower, 890 °C or lower, or 900 °C or lower. If the primary firing temperature is within the above-described range, a reaction between the composite transition metal hydroxide and lithium progresses uniformly, so that a positive electrode active material to be finally prepared may be structurally stable and uniform. If the temperature is lower than 750 °C, the reaction between the lithium and the composite transition metal hydroxide does not progress sufficiently, thereby forming a positive electrode active material in the form of a secondary particle in which more than 10 primary particles are aggregated during the secondary firing, so that there is a problem in that lifespan properties are degraded, and if higher than 900 °C, the growth of primary particles progresses rapidly, thereby inducing the growth of non-uniform particles during the secondary firing, so that there is a problem in that the capacity is reduced.

According to the present invention, the primary firing is performed under an atmospheric atmosphere, in terms of easy maintenance of a heat-treatment atmosphere and being economical.

According to the present invention, the primary firing may be performed for 2 hours to 10 hours. In this case, a reaction between the composite transition metal hydroxide and lithium ions progresses adequately, so that the uniform distribution of lithium may be achieved even to the inside of a positive electrode active material, and the uniform particle growth may be achieved overall.

Immediately after the primary firing is completed, if the temperature is continuously raised to 920 °C to 1,000 °C, and the secondary firing is performed at 920 °C to 1,000 °C, the size of primary particles increases, so that particles in the form of a single particle are prepared. If the secondary firing temperature is within the above-described range, primary particles are grown to an adequate level, so that a positive electrode active material in the form of a single particle may be prepared, and capacity properties and lifespan properties may be improved. Meanwhile, if the secondary firing temperature is lower than 920 °C, the size of primary particles is small, thereby preparing a non-uniform positive electrode active material in the form of a secondary particle, not in the form of a single particle, so that there is a problem in that lifespan is reduced, and if higher than 1,000 °C, the size of primary particles becomes too large, thereby degrading the movement of lithium, so that there is a problem in that resistance increases and capacity properties are degraded.

The secondary firing is performed under an atmospheric atmosphere, in terms of easy maintenance of a firing atmosphere and being economical.

According to the present invention, the secondary firing may be performed for 2 hours to 10 hours. In this case, primary particles are grown to an adequate degree, so that capacity properties and lifespan properties may be improved.

Immediately after the secondary firing is completed, if the temperature is continuously lowered to 500 °C to 800 °C, and the tertiary firing is performed at 500 °C to 800 °C, a surface stabilization reaction occurs, so that a fired product with increased crystal structure stability is produced. In this case, the fired product may be a lithium nickel cobalt manganese-based oxide having a nickel content of 60 mol% or greater among all transition metals, and in the form of a single particle composed of 10 or fewer primary particles. If the tertiary firing temperature is within the above-described range, structural stability increases, so that a charge/discharge capacity and resistance may be improved. Meanwhile, if the tertiary firing temperature is lower than 500 °C, cation mixing increases due to degradation in the structural stability of a positive electrode active material, so that there is a problem of reduced lifespan performance, and if higher than 800 °C, there is a problem of increased resistance and a decreased charge capacity due to a structural change on the surface.

The tertiary firing is performed under an atmospheric atmosphere, in terms of easy maintenance of a firing atmosphere and being economical.

According to the present invention, the tertiary firing may be performed for 2 hours to 10 hours. In this case, the structural stability of a positive electrode active material increases, so that there is an advantage in that the charge/-discharge capacity and efficiency increase.

The method for preparing a positive electrode active material according to the present invention may further include (C) finely pulverizing the fired product, in terms of improving a capacity through uniform application of a positive electrode active material when manufacturing an electrode.

According to the present invention, the fine pulverization may be performed by vortex flow-type pulverization. In this case, it is possible to perform pulverization according to a target particle size range, which is advantageous in setting a particle size optimized for capacity and lifespan performance.

According to the present invention, the vortex flow-type pulverization may be performed under a pressure of 1.5 bar to 5 bar. In this case, through uniform pulverization without damage to primary particles, the charge/discharge capacity and lifespan performance of a positive electrode active material may be improved.

The method for preparing a positive electrode active material according to the present invention may further include (C') mixing the fired product with one or more selected from an aluminum raw material, and a tungsten raw material, and then heat-treating the mixture, thereby forming a coating layer containing one or more selected from Al and W on the fired product. In this case, a coating portion containing one or more selected from Al and W is formed on the fired product (the lithium nickel cobalt manganese-based oxide in the form of a single particle).

According to the present invention, the aluminum raw material may be added in an amount such that aluminum is 1,000 ppm to 2,000 ppm with respect to the total weight of the fired product. Specifically, the aluminum raw material may be added in an amount such that aluminum is, with respect to the total weight of the fired product, 1,000 ppm or greater, 1,100 ppm or greater, 1,200 ppm or greater, or 1,300 ppm or greater, and 1,400 ppm or less, 1,500 ppm or less, 1,600 ppm or less, 1,700 ppm or less, 1,800 ppm or less, 1,900 ppm or less, or 2,000 ppm or less.

According to the present invention, the tungsten raw material may be added in an amount such that tungsten is 2,000 ppm to 4,000 ppm with respect to the total weight of the fired product. Specifically, the tungsten raw material may be added in an amount such that tungsten is, with respect to the total weight of the fired product, 2,000 ppm or greater, 2,100 ppm or greater, or 2,200 ppm or greater, and 2,500 ppm or less, 2,600 ppm or less, 2,700 ppm or less, 2,800 ppm or less, 2,900 ppm or less, 3,000 ppm or less, 3,100 ppm or less, 3,200 ppm or less, 3,300 ppm or less, 3,400 ppm or less, 3,500 ppm or less, 3,600 ppm or less, 3,700 ppm or less, 3,800 ppm or less, 3,900 ppm or less, or 4,000 ppm or less.

According to the present invention, the aluminum raw material and the tungsten raw material may be mixed in an amount such that the total amount of coating elements Al and W with respect to the total weight of the fire product is to be 3,000 ppm to 6,000 ppm. Specifically, the aluminum raw material and the tungsten raw material may be mixed in an amount such that the total amount of the coating elements Al and W with respect to the total weight of the fired product is to be 3,000 ppm or greater, 3,100 ppm or greater, 3,200 ppm or greater, 3,300 ppm or greater, 3,400 ppm or greater, 3,500 ppm or greater, 3,600 ppm or greater, 3,700 ppm or greater, 3,800 ppm or greater, 3,900 ppm or greater, 4,000 ppm or greater, 4,100 ppm or greater, 4,200 ppm or greater, 4,300 ppm or greater, 4,400 ppm or greater, or 4,500 ppm or greater, and, 4,600 ppm or less, 4,700 ppm or less, 4,800 ppm or less, 4,900 ppm or less, 5,000 ppm or less, 5,100 ppm or less, 5,200 ppm or less, 5,300 ppm or less, 5,400 ppm or less, 5,500 ppm or less, 5,600 ppm or less, 5,700 ppm or less, 5,800 ppm or less, 5,900 ppm or less, or 6,000 ppm or less. In this case, the electrical conductivity of a positive electrode active material to be prepared as a result may be improved, and a by-product formed due to a side reaction with an electrolyte solution may be controlled, so that the capacity properties and lifespan properties of a battery may be improved.

The heat-treatment may be performed under an atmospheric atmosphere, an oxygen atmosphere, or an inert atmosphere. Specifically, since it is advantageous in terms of easy maintenance of a heat-treatment atmosphere and being economical, the heat-treatment may be performed under an atmospheric atmosphere.

In addition, the heat-treatment may be performed at a temperature of 400 °C to 600 °C. Specifically, the heat-treatment may be maintained at a temperature of 400 °C or higher, 410 °C or higher, 420 °C or higher, 430 °C or higher, 440 °C or higher, 450 °C or higher, 460 °C or higher, 470 °C or higher, 480 °C or higher, 490 °C or higher, or 500 °C or higher, and 510 °C or lower, 520 °C or lower, 530 °C or lower, 540 °C or lower, 550 °C or lower, 560 °C or lower, 570 °C or lower, 580 °C or lower, 590 °C or lower, or 600 °C or lower. If the heat-treatment temperature is within the above-described range, sufficient heat energy required for coating may be supplied. If the lithium nickel cobalt manganese-based oxide and Al and W coating raw materials are mixed and then heat-treated in the above-described temperature range, a coating layer including coating elements Al and W on the lithium nickel cobalt manganese-based oxide may be formed. The coating layer including the coating elements Al and W may be in the form of partially covering (discontinuous) at least a portion on the lithium nickel cobalt manganese-based oxide, i.e., a region on the lithium nickel cobalt manganese-based oxide, or covering (continuous) the entire region. The coating layer may be in the form of a film type, an island type, or a combination thereof.

The heat-treatment may be performed for 3 hours to 9 hours. Specifically, the heat-treatment may be performed for 3 hours or more, 4 hours or more, or 5 hours or more, and 6 hours or less, 7 hours or less, 8 hours or less, or 9 hours or less. If the heat-treatment time is within the above-described range, thermal energy sufficient enough to form a coating layer may be supplied.

## Positive electrode

The present invention provides a positive electrode including the above-described positive electrode active material.

The positive electrode may include a positive electrode current collector, and a positive electrode active material layer formed on the positive electrode current collector, and the positive electrode active material layer may include the above-described positive electrode active material.

The positive electrode current collector may include a highly conductive metal, and is not particularly limited as long as it is not reactive in a voltage range of a battery while a positive electrode active material layer is able to be easily adhered to the positive electrode current collector. As the positive electrode current collector, for example, stainless steel, aluminum, nickel, titanium, fired carbon, or aluminum or stainless steel that is surface-treated with one of carbon, nickel, titanium, silver, and the like may be used. In addition, the positive electrode current collector may typically have a thickness of 3 $\mu$m to 500 $\mu$m, and microscopic irregularities may be formed on the surface of the current collector to improve the adhesion of the positive electrode active material. For example, the positive electrode current collector may be used in various forms such as a film, a sheet, a foil, a net, a porous body, a foam, and a non-woven body.

The positive electrode active material layer may selectively include, if necessary, a conductive material and a binder together with the positive electrode active material. In this case, the positive electrode active material may be included in a content of 80 wt% to 99 wt%, more specifically, 85 wt% to 98.5 wt% with respect to the total weight of the positive electrode active material layer, and may exhibit excellent capacity performance within the above-described ranges.

The conductive material is used to impart conductivity to an electrode, and any conductive material may be used without particular limitation as long as it has electron conductivity without causing a chemical change in a battery to be constituted. Specific examples thereof may include graphite such as natural graphite or artificial graphite; a carbon-based material such as carbon black, acetylene black, Ketjen black, channel black, furnace black, lamp black, thermal black, and carbon fiber; metal powder or metal fiber of such as copper, nickel, aluminum, and silver; a conductive tube such as a carbon nanotube; a conductive whisker such as a zinc oxide whisker and a potassium titanate whisker; a conductive metal oxide such as a titanium oxide; or a conductive polymer such as a polyphenylene derivative, and any one thereof or a mixture of two or more thereof may be used. The conductive material may be included in an amount of 0.1 wt% to 15 wt% with respect to the total weight of the positive electrode active material layer.

The binder serves to improve the bonding between positive electrode active material particles and the adhesive force between the positive electrode active material and the current collector. Specific examples thereof may include polyvinylidene fluoride (PVDF), a polyvinylidene fluoride-hexafluoropropylene copolymer (PVDF-co-HFP), polyvinyl alcohol, polyacrylonitrile, polymethymethaxrylate, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer (EPDM), a sulfonated EPDM, styrene-butadiene rubber (SBR), fluorine rubber, a poly acrylic acid, a polymer having the hydrogen thereof substituted with Li, Na, or Ca, or various copolymers thereof, and any one thereof or a mixture of two or more thereof may be used. The binder may be included in an amount of 0.1 wt% to 15 wt% with respect to the total weight of the positive electrode active material layer.

The positive electrode may be manufactured according to a typical method for manufacturing a positive electrode except that the positive electrode active material described above is used. Specifically, the positive electrode may be manufactured by applying a composition for forming a positive electrode active material layer, which is prepared by dissolving or dispersing the above-described positive electrode active material, and selectively, if necessary, a binder, a conductive material, and a dispersant in a solvent, on a positive electrode current collector, followed by drying and roll-pressing, or manufactured by casting the composition for forming a positive electrode active material layer on a separate support, and then laminating a film obtained by peeling the same off from the support on the positive electrode current collector.

The solvent may be a solvent commonly used in the art, and may be dimethyl sulfoxide (DMSO), isopropyl alcohol, N-methylpyrrolidone (NMP), dimethyl formamide (DMF), acetone, water, or the like, and any one thereof or a mixture of two or more thereof may be used. The amount of the solvent to be used is sufficient if the solvent dissolves or disperses the positive electrode active material, the conductive material, the binder, and the dispersant in consideration of the coating thickness of a slurry, and a manufacturing yield, and thereafter, allows the slurry to have a viscosity capable of exhibiting excellent thickness uniformity when applied for manufacturing the positive electrode.

## Lithium secondary battery

The present invention provides a lithium secondary battery including the above-described positive electrode, a negative electrode, a separator interposed between the positive electrode and the negative electrode, and an electrolyte.

The lithium secondary battery may selectively further include a battery case for accommodating an electrode assembly of the positive electrode, the negative electrode, and the separator, and a sealing member for sealing the battery case.

The negative electrode may include a negative electrode current collector, and a negative electrode active material layer positioned on the negative electrode current collector.

The negative electrode current collector is not particularly limited as long as it has high conductivity without causing a chemical change in a battery, and for example, copper, stainless steel, aluminum, nickel, titanium, fired carbon, copper or stainless steel that is surface-treated with one of carbon, nickel, titanium, silver, and the like, an aluminum-cadmium alloy, and the like may be used. Also, the negative electrode current collector may typically have a thickness of 3 $\mu$m to 500 $\mu$m, and as in the case of the positive electrode current collector, microscopic irregularities may be formed on the surface of the negative electrode current collector to improve the binding force of the negative electrode active material. For example, the negative electrode current collector may be used in various forms such as a film, a sheet, a foil, a net, a porous body, a foam, and a non-woven body.

The negative electrode active material layer may selectively include a binder and a conductive material together with the negative electrode active material.

As the negative electrode active material, a compound capable of reversible intercalation and de-intercalation of lithium may be used. Specific examples thereof may include a carbonaceous material such as artificial graphite, natural graphite, graphitized carbon fiber, and amorphous carbon; a metallic compound alloyable with lithium such as Si, Al, Sn, Pb, Zn, Bi, In, Mg, Ga, Cd, an Si alloy, an Sn alloy, or an Al alloy; a metal oxide which may be doped and undoped with lithium such as $SiO_\beta$ ($0 < \beta < 2$), $SnO_2$, a vanadium oxide, and a lithium vanadium oxide; or a composite including the metallic compound and the carbonaceous material such as an Si-C composite or an Sn-C composite, and any one thereof or a mixture of two or more thereof may be used. In addition, a metal lithium thin film may be used as the negative electrode active material. In addition, low crystalline carbon, high crystalline carbon, and the like may all be used as a carbon material. Representative examples of the low crystalline carbon may include soft carbon and hard carbon, and representative examples of the high crystalline carbon may include irregular, planar, flaky, spherical, or fibrous natural graphite or artificial graphite, Kish graphite, pyrolytic carbon, mesophase pitch-based carbon fiber, meso-carbon microbeads, mesophase pitches, and high-temperature fired carbon such as petroleum or coal tar pitch derived cokes. The negative electrode active material may be included in 80 wt% to 99 wt% based on the total weight of the negative electrode active material layer.

The binder of the negative electrode active material layer is a component for assisting in bonding between a conductive material, an active material, and a current collector, and is typically added in an amount of 0.1 wt% to 10 wt% based on the total weight of a negative electrode active material layer. Examples of the binder may include polyvinylidene fluoride (PVDF), polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer (EPDM), a sulfonated-EPDM, styrene-butadiene rubber, nitrile-butadiene rubber, fluorine rubber, various copolymers thereof, and the like.

The conductive material of the negative electrode active material layer is a component for further improving the conductivity of the negative electrode active material, and may be added in an amount of 10 wt% or less, preferably 5 wt% or less based on the total weight of the negative electrode active material layer. The conductive material is not particularly limited as long as it has conductivity without causing a chemical change in the battery, and for example, graphite such as natural graphite or artificial graphite; carbon black such as acetylene black, Ketjen black, channel black, furnace black, lamp black, and thermal black; conductive fiber such as carbon fiber and metal fiber; fluorinated carbon; metal powder such as aluminum powder and nickel powder; a conductive whisker such as zinc oxide and potassium titanate; a conductive metal oxide such as titanium oxide; and a conductive material such as a polyphenylene derivative, or the like may be used.

The negative electrode may be prepared by applying a composition for forming a negative electrode active material layer, which is prepared by dissolving or dispersing a negative electrode active material, and selectively, a binder and a conductive material in a solvent, on a negative electrode current collector, followed by drying, or may be prepared by casting the composition for forming a negative electrode active material on a separate support, and then laminating a film obtained by peeling the same off from the support on the negative electrode current collector.

The separator is to separate the negative electrode and the positive electrode and to provide a movement path for lithium ions, and any separator may be used without particular limitation as long as it is a separator commonly used in a lithium secondary battery, and particularly, a separator having excellent moisture-retention of an electrolyte as well as low resistance to ion movement in the electrolyte is preferable. Specifically, a porous polymer film, for example, a porous polymer film manufactured using a polyolefin-based polymer such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous non-woven fabric, for example, a non-woven fabric formed of glass fiber having a high melting point, polyethylene terephthalate fiber, or the like may be used. Also, a coated separator including a ceramic component or a polymer material may be used to secure heat resistance or mechanical strength, and may be selectively used in a single-layered or a multi-layered structure.

The electrolyte may be an organic liquid electrolyte, an inorganic liquid electrolyte, a solid polymer electrolyte, a gel-type polymer electrolyte, a solid inorganic electrolyte, a molten-type inorganic electrolyte, and the like, which may be used in the manufacture of a lithium secondary battery, but is not limited thereto. As a specific example, the electrolyte may include an organic solvent and a lithium salt.

As the organic solvent, any organic solvent may be used without particular limitation as long as it can serve as a medium through which ions involved in an electrochemical reaction of a battery may move. Specifically, as the organic solvent, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; a carbonate-based solvent such as dimethyl carbonate (DMC), diethyl carbonate (DEC), ethylmethyl carbonate (EMC), ethylene carbonate (EC), and propylene carbonate (PC); an alcohol-based solvent such as ethyl alcohol and isopropyl alcohol; nitriles such as R-CN (wherein R is a linear, branched, or cyclic C2 to C20 hydrocarbon group and may include a double-bond aromatic ring or ether bond); amides such as dimethylformamide; dioxolanes such as 1,3-dioxolane; or sulfolanes may be used. Among these, the carbonate-based solvent is preferred, and a mixture of a cyclic carbonate (e.g., ethylene carbonate or propylene carbonate) having high ion conductivity and a high dielectric constant, which may increase charge/discharge performance of the battery, and a low-viscosity linear carbonate-based compound (e.g., ethylmethyl carbonate, dimethyl carbonate, diethyl carbonate, or the like) is more preferred.

As the lithium salt, any compound may be used without particular limitation as long as it can provide lithium ions used in a lithium secondary battery. Specifically, anions of the lithium salt may be at least one selected from the group consisting of $F^-$, $Cl^-$, $Br^-$, $I^-$, $NO_3^-$, $N(CN)_2^-$, $BF_4^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, and $(CF_3CF_2SO_2)_2N^-$, and as the lithium salt, $LiPF_6$, $LiClO_4$, $LiAsF_6$, $LiBF_4$, $LiSbF_6$, $LiAl0_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, $LiCl$, $LiI$, $LiB(C_2O_4)_2$, or the like may be used. The lithium salt may be used in a concentration range of 0.1 M to 2.0 M. If the concentration of the lithium salt is included in the above-described range, the electrolyte has suitable conductivity and viscosity, and thus, may exhibit excellent electrolyte performance, and lithium ions may effectively move.

In order to improve lifespan of a battery, suppress a decrease in battery capacity, improve discharge capacity of the battery, and the like, the electrolyte may further include one or more kinds of additives, for example, a halo-alkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, aluminum trichloride, and the like. At this time, the additive may be included in an amount of 0.1 wt% to 5 wt% with respect to the total weight of the electrolyte.

A lithium secondary battery including the above-described positive electrode active material according to the present invention has excellent performance, and thus, is useful for portable devices such as a mobile phone, a notebook computer, and a digital camera, and in the field of electric cars such as a hybrid electric vehicle (HEV).

The external shape of the lithium secondary battery of the present invention is not particularly limited, but may be a cylindrical shape using a can, a square shape, a pouch shape, a coin shape, or the like.

The lithium secondary battery according to the present invention may be used in a battery cell which is used as a power source for a small-sized device, and may also be preferably used as a unit cell for a medium- and large-sized battery module including a plurality of battery cells.

Accordingly, a battery module including the lithium secondary battery as a unit cell, and a battery pack including the battery module are provided.

The battery module or the battery pack may be used as a power source for a power tool, an electric car including an electric vehicle (EV), a hybrid electric vehicle, and a plug-in hybrid electric vehicle (PHEV), or one or more medium-to-large devices in a system for power storage.

## MODE FOR CARRYING OUT THE INVENTION

Hereinafter, embodiments of the present invention will be described in detail so that those skilled in the art may easily carry out the present invention. However, the present invention may be embodied in many different forms, and is not limited to the embodiments set forth herein.

## Examples and Comparative Examples

### Example 1

A composite transition metal hydroxide (composition: $Ni_{0.617}Co_{0.06}Mn_{0.32}Zr_{0.003}(OH)_2$, average particle diameter ($D_{50}$): 3.5 $\mu$m) in the form of a secondary particle formed by aggregation of tens to hundreds of primary particles, and $Y_2O_3$ (introduced in an amount such that yttrium was to be 0.3 mol% with respect to the composite transition metal hydroxide) were introduced into an acoustic mixer, and sequentially mixed at 40 g (g: gravitational acceleration) for 2 minutes, at 80 g for 1 minute, and at 50 g for 2 minutes. Thereafter, $Li_2CO_3$ was introduced into the acoustic mixer such that a ratio ((Ni+Co+Mn+Zr):Li) of the total number of moles of transition metals (Ni+Co+Mn+Zr) included in the composite transition metal hydroxide to the number of moles of lithium (Li) included in $Li_2CO_3$ was to be 1:1.06, and sequentially mixed at 40 g (g: gravitational acceleration) for 2 minutes, at 80 g for 1 minute, and at 50 g for 2 minutes to prepare a mixture.

The mixture was introduced into a square alumina crucible (150mm×150mm), subjected to primary firing at 850 °C for 6 hours under an atmospheric atmosphere, subjected to secondary firing at 955 °C for 3 hours after the temperature was continuously raised to 955 °C (temperature raising rate: 1.25 °C/min), and then subjected to tertiary firing at 600 °C for 2 hours after the temperature was continuously lowered to 600 °C (temperature lowering rate: 3°C/min) to prepare a fired product.

The fired product was finely pulverized at a rate of 5 g per minute under a sample injection pressure of 6 bar and a pulverization pressure of 4 bar by using a jet mill (Isaac ENC Co., Ltd., 2-inch Jet Mill).

The finely pulverized fired product was mixed with $Al_2O_3$ (introduced in an amount such that Al was to be 1,500 ppm with respect to the total weight of the fired product) and $WO_3$ (introduced in an amount such that W was to be 3,000 ppm with respect to the total weight of the fired product), and then heat-treated at 500 °C under an atmospheric atmosphere for 6 hours to prepare a positive electrode active material including a coating layer containing Al and W.

**Example 2**

A composite transition metal hydroxide (composition: $Ni_{0.617}Co_{0.06}Mn_{0.32}Zr_{0.003}(OH)_2$, average particle diameter ($D_{50}$): 3.5 $\mu$m) in the form of a secondary particle formed by aggregation of tens to hundreds of primary particles, and $Y_2O_3$ (introduced in an amount such that yttrium was to be 0.3 mol% with respect to the composite transition metal hydroxide) were introduced into an acoustic mixer, and sequentially mixed at 40 g (g: gravitational acceleration) for 2 minutes, at 80 g for 1 minute, and at 50 g for 2 minutes. Thereafter, $Li_2CO_3$ was introduced into the acoustic mixer such that a ratio ((Ni+Co+Mn+Zr):Li) of the total number of moles of transition metals (Ni+Co+Mn+Zr) included in the composite transition metal hydroxide to the number of moles of lithium (Li) included in $Li_2CO_3$ was to be 1:1.06, and sequentially mixed at 40 g (g: gravitational acceleration) for 2 minutes, at 80 g for 1 minute, and at 50 g for 2 minutes to prepare a mixture.

The mixture was introduced into a square alumina crucible (150 mm×150 mm), subjected to primary firing at 850 °C for 4 hours under an atmospheric atmosphere, subjected to secondary firing at 945 °C for 5 hours after the temperature was continuously raised to 945 °C (temperature raising rate: 1.25 °C/min), and then subjected to tertiary firing at 600 °C for 6 hours and 30 minutes after the temperature was continuously lowered to 600 °C (temperature lowering rate: 3 °C/min) to prepare a fired product.

The fired product was finely pulverized at a rate of 5 g per minute under a sample injection pressure of 6 bar and a pulverization pressure of 4 bar by using a jet mill (Isaac ENC Co., Ltd., 2-inch Jet Mill).

The finely pulverized fired product was mixed with $Al_2O_3$ (introduced in an amount such that Al was to be 1,500 ppm with respect to the total weight of the fired product) and $WO_3$ (introduced in an amount such that W was to be 3,000 ppm with respect to the total weight of the fired product), and then heat-treated at 500 °C under an atmospheric atmosphere for 6 hours to prepare a positive electrode active material including a coating layer containing Al and W.

**Comparative Example 1**

A composite transition metal hydroxide (composition: $Ni_{0.62}Co_{0.06}Mn_{0.32}(OH)_2$, average particle diameter ($D_{50}$): 3.5 $\mu$m) in the form of a secondary particle formed by aggregation of tens to hundreds of primary particles, $ZrO_2$ (introduced in an amount such that zirconium was to be 0.3 mol% with respect to the composite transition metal hydroxide), and $Y_2O_3$ (introduced in an amount such that yttrium was to be 0.3 mol% with respect to the composite transition metal hydroxide) were introduced into an acoustic mixer, and sequentially mixed at 40 g (g: gravitational acceleration) for 2 minutes, at 80 g for 1 minute, and at 50 g for 2 minutes. Thereafter, $Li_2CO_3$ was introduced into the acoustic mixer such that a ratio ((Ni+Co+Mn+Zr):Li) of the total number of moles of transition metals (Ni+Co+Mn+Zr) included in the composite transition metal hydroxide to the number of moles of lithium (Li) included in $Li_2CO_3$ was to be 1:1.06, and sequentially mixed at 40 g (g: gravitational acceleration) for 2 minutes, at 80 g for 1 minute, and at 50 g for 2 minutes to prepare a mixture.

The mixture was introduced into a square alumina crucible (150mm×150mm), subjected to primary firing at 850 °C for 6 hours under an atmospheric atmosphere, subjected to secondary firing at 955 °C for 3 hours after the temperature was continuously raised to 955 °C (temperature raising rate: 1.25 °C/min), and then subjected to tertiary firing at 600 °C for 2 hours after the temperature was continuously lowered to 600 °C (temperature lowering rate: 3°C/min) to prepare a fired product.

The fired product was finely pulverized at a rate of 5 g per minute under a sample injection pressure of 6 bar and a pulverization pressure of 4 bar by using a jet mill (Isaac ENC Co., Ltd., 2-inch Jet Mill).

The finely pulverized fired product was mixed with $Al_2O_3$ (Evonik Co., Ltd.) (introduced in an amount such that Al was to be 1,500 ppm with respect to the total weight of the fired product) and $WO_3$ (Zenichem Co., Ltd.) (introduced in an amount such that W was to be 3,000 ppm with respect to the total weight of the fired product), and then heat-treated at 500 °C under an atmospheric atmosphere for 6 hours to prepare a positive electrode active material including a coating layer containing Al and W.

**Comparative Example 2**

A composite transition metal hydroxide (composition: $Ni_{0.62}Co_{0.06}Mn_{0.32}(OH)_2$, average particle diameter ($D_{50}$): 3.5 μm) in the form of a secondary particle formed by aggregation of tens to hundreds of primary particles, $ZrO_2$ (introduced in an amount such that zirconium was to be 0.3 mol% with respect to the composite transition metal hydroxide), and $Y_2O_3$ (introduced in an amount such that yttrium was to be 0.3 mol% with respect to the composite transition metal hydroxide) were introduced into an acoustic mixer, and sequentially mixed at 40 g (g: gravitational acceleration) for 2 minutes, at 80 g for 1 minute, and at 50 g for 2 minutes. Thereafter, $Li_2CO_3$ was introduced into the acoustic mixer such that a ratio ((Ni+Co+Mn+Zr):Li) of the total number of moles of transition metals (Ni+Co+Mn+Zr) included in the composite transition metal hydroxide to the number of moles of lithium (Li) included in $Li_2CO_3$ was to be 1:1.06, and sequentially mixed at 40 g (g: gravitational acceleration) for 2 minutes, at 80 g for 1 minute, and at 50 g for 2 minutes to prepare a mixture.

The mixture was introduced into a square alumina crucible (150 mm × 150 mm), subjected to primary firing at 850 °C for 4 hours under an atmospheric atmosphere, subjected to secondary firing at 945 °C for 5 hours after the temperature was continuously raised to 945 °C (temperature raising rate: 1.25 °C/min), and then subjected to tertiary firing at 600 °C for 6 hours and 30 minutes after the temperature was continuously lowered to 600 °C (temperature lowering rate: 3 °C/min) to prepare a fired product.

The fired product was finely pulverized at a rate of 5 g per minute under a sample injection pressure of 6 bar and a pulverization pressure of 4 bar by using a jet mill (Isaac ENC Co., Ltd., 2-inch Jet Mill).

The finely pulverized fired product was mixed with $Al_2O_3$ (introduced in an amount such that Al was to be 1,500 ppm with respect to the total weight of the fired product) and $WO_3$ (introduced in an amount such that W was to be 3,000 ppm with respect to the total weight of the fired product), and then heat-treated at 500 °C under an atmospheric atmosphere for 6 hours to prepare a positive electrode active material including a coating layer containing Al and W.

**Experimental Examples**

**Experimental Example 1: (1) Analysis of particle size of positive electrode active material**

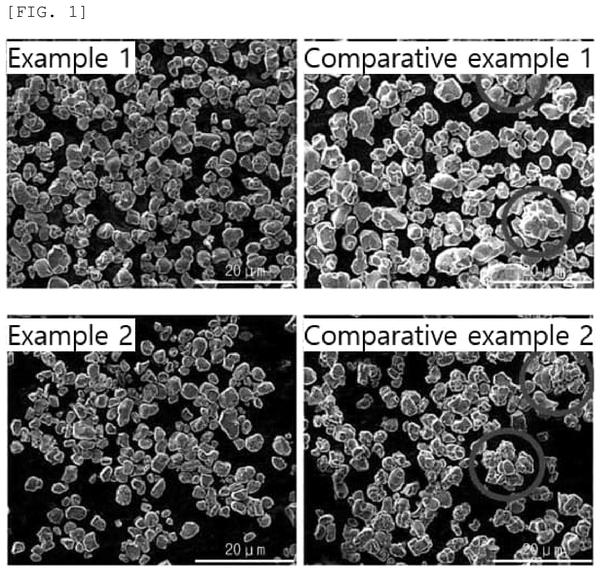

By using an SEM (FEI Co., Ltd., Inspect F), an SEM image (5,000×) of each of the positive electrode active materials prepared in Examples 1 and 2 and Comparative Examples 1 and 2 was obtained, and is shown in FIG. 1.

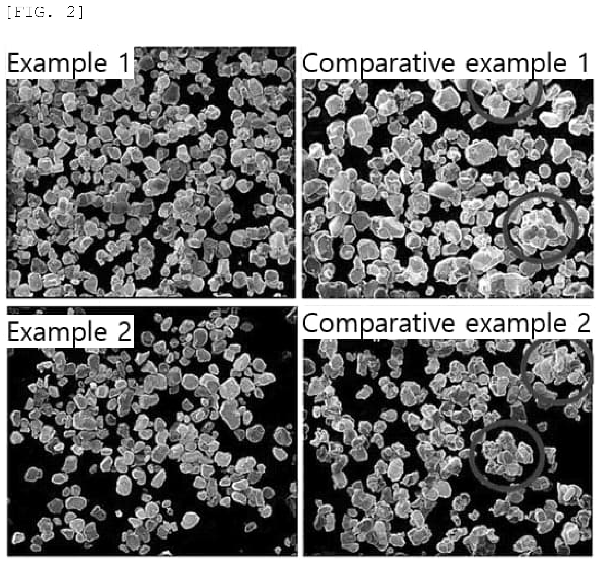

In addition, by using an image processing program (LG Chemical Co., Ltd., DX program), boundaries of primary particles present in five SEM images (5,000×) of each of the positive electrode active materials prepared in Examples 1 and 2 and Comparative Examples 1 and 2 were divided, and are shown in random colors. FIG. 2 is a drawing showing SEM images (5,000 ×) of positive electrode active materials respectively prepared in Examples 1 and 2, and Comparative Examples 1 and 2, which are image-processed to divide and show boundaries of primary particles in random colors.

The drawing shown in random colors obtained by dividing the boundaries of the primary particles was used to calculate the area of each of the primary particles was calculated through the number of pixels corresponding to each of n primary particles, a radius ($r_i$) of a circle having the same area as the area of each of the primary particles was used to calculate a particle diameter ($D_i=2r_i$) and a volume ($V_i=4/3\times\pi r_i^3$) of each of the primary particles present in the SEM image, the total sum of values ($V_iD_i$) obtained by multiplying the volume and the particle diameter calculated for each primary particle was divided by the total sum of the volumes ($V_i$) calculated to derive a volume average particle diameter of the primary particles, the total sum of the calculated particle diameters was divided by the number of the primary particle to derive a number-average particle diameter, and then a PDI value was obtained according to Equation 1 described in the present invention, all of which are shown in Table 1 below.

In addition, the drawing shown in random colors obtained by dividing the boundaries of the primary particles was used to calculate particle diameters at points of 10%, 50%, and 90% in a volume cumulative distribution according to a particle diameter from the calculated particle diameters and volumes of all primary particles, thereby confirming $D_{v,10}$, $D_{v,50}$, and $D_{v,90}$, and the $D_{v,50}$ and a span (($D_{v,90}$-$D_{v,10}$)/$D_{v,50}$) value are shown in Table 1 below.

**Experimental Example 2: (2) Analysis of particle size of positive electrode active material**

0.01 g of each of the positive electrode active materials (powder) prepared in Examples and Comparative Examples was taken, placed in a vial containing 30 ml of ultrapure water and 500 μl of a dispersant, thereby dispersing the positive electrode active material for 1 minute using a sonicator, and then placed in a PSA (Microtrac Co., Ltd., S3500) to be analyzed, thereby confirming $D_{50}$, which is shown in Table 1 below.

At this time, the $D_{50}$ means a particle diameter at a point of 50% in a volume cumulative distribution according to a particle diameter.

[Table 1]

| Classific ation | Volume average particle diameter of primary particle s ($\mu$m) | Number-average particle diameter of primary particle s ($\mu$m) | PDI | Span $((D_{v,90}-D_{v,10})/D_{v, 50})$ value | $D_{v,50}$ | $D_{50}$ ($\mu$m) as measured by using PSA |
|---|---|---|---|---|---|---|
| Example 1 | 2.526 | 1.332 | 1.896 | 0.813 | 2.55 | 3.54 |
| Example 2 | 2.670 | 1.447 | 1.846 | 0.809 | 2.66 | 3.98 |
| Comparati ve Example 1 | 2.874 | 1.360 | 2.111 | 0.910 | 2.87 | 3.82 |
| Comparati ve Example 2 | 2.586 | 1.212 | 2.134 | 0.938 | 2.57 | 3.81 |

Referring to Table 1 above, the positive electrode active material of each of Examples 1 and 2 has a PDI value close to 1 and a low span value, and thus, is confirmed to have a uniform particle diameter compared to the positive electrode active material of each of Comparative Examples 1 and 2.

Referring to FIG. 1, it can be confirmed that the positive electrode active materials of Examples 1 and 2 are present only in the form of a single particle composed of 10 or fewer primary particles, whereas the positive electrode active materials of Comparative Examples 1 and 2 are present in the form of a secondary particle in which primary particles smaller than the primary particles of Examples 1 and 2 are aggregated, as well as in the form of a single particle composed of primary particles grown to be very large.

Referring to FIG. 2, it can be confirmed that in the case of Examples 1 and 2, there are not many portions in which primary particles shown in different colors are aggregated together and primary particles having a uniform size are evenly distributed, whereas in the case of Comparative Examples 1 and 2, there are potions in which the primary particles shown in different colors are aggregated together, and individual primary particles do not have a uniform size.

**Experimental Example 3: Analysis of ICP**

0.1 g of each of the fired products (hereinafter, referred to as a lithium nickel cobalt manganese-based oxide) prepared in Examples and Comparative Examples was taken, added with 1 ml of hydrochloric acid, and then heated to dissolve the lithium nickel cobalt manganese-based oxide. Thereafter, in order to accelerate the reaction, a small amount of hydrogen peroxide water was added thereto, thereby completely dissolving the lithium nickel cobalt manganese-based oxide, resulting in preparing a solution. Then, the solution was diluted with deionized water such that the total volume of the solution was to be 10 mL, resulting in preparing an analysis sample. An ICP device (ICP-OES; Agilent 5110, Agilent Technologies Co., Ltd.) was used to measure the weight ratio of constituent elements present in the analysis sample, and the composition of the lithium nickel cobalt manganese-based oxide, and the content (ppm) of Zr and the content (ppm) of Y, which are present in the lithium nickel cobalt manganese-based oxide, are shown in Table 2 below.

In addition, 0.1 g of each of the positive electrode active materials prepared in Examples and Comparative Examples was taken, added with 1 ml of hydrochloric acid, and then heated to dissolve the positive electrode active material. Thereafter, in order to accelerate the reaction, a small amount of hydrogen peroxide water was added to completely dissolve the positive electrode active material, thereby preparing a solution. Then, the solution was diluted with deionized water such that the total volume of the solution was to be 10 mL, thereby preparing an analysis sample. An ICP device (ICP-OES; Agilent 5110, Agilent Technologies Co., Ltd.) was used to measure the weight ratio of constituent elements present in the analysis sample, and the content (ppm) of Al and the content (ppm) of W, which are present in the positive electrode active material, are shown in Table 2 below.

[Table 2]

| Classifica tion | Composition of lithium nickel cobalt manganese-based oxide | Content of Zr (ppm) | Content of Y (ppm) | Content of Al (ppm) | Content of W (ppm) |
|---|---|---|---|---|---|
| Example 1 | $Li_{1.0402}Ni_{0.6173}Co_{0.0606}Mn_{0.3161}Zr_{0.0033}Y_{0.0027}O_2$ | 2980 | 2420 | 1355 | 2288 |
| Example 2 | $Li_{1.0412}Ni_{0.6183}Co_{0.0596}Mn_{0.3161}Zr_{0.0032}Y_{0.0027}O_2$ | 2930 | 2430 | 1361 | 2445 |

(continued)

| Classifica tion | Composition of lithium nickel cobalt manganese-based oxide | Content of Zr (ppm) | Content of Y (ppm) | Content of Al (ppm) | Content of W (ppm) |
|---|---|---|---|---|---|
| Comparativ e Example 1 | $Li_{1.0407}Ni_{0.6185}Co_{0.0597}Mn_{0.3162}Zr_{0.0030}Y_{0.0027}O_2$ | 2700 | 2380 | 1253 | 2264 |
| Comparativ e Example 2 | $Li_{1.0406}Ni_{0.6175}Co_{0.0587}Mn_{0.3182}Zr_{0.0029}Y_{0.0027}O_2$ | 2680 | 2410 | 1297 | 2253 |

From Table 2 above, it has been confirmed that the lithium nickel cobalt manganese-based oxides prepared in Examples 1 and 2 and Comparative Examples 1 and 2 have a composition represented by Formula 1 above, and include doping elements Zr and Y. In addition, it has been confirmed that the positive electrode active materials prepared in Examples 1 and 2 and Comparative Examples 1 and 2 include a coating layer containing Al and W.

**Experimental Example 4: Evaluation of battery performance**

Each of the positive electrode active materials prepared in Examples and Comparative Examples, a Super P conductive material, and a polyvinylidene fluoride (PVDF) binder were mixed at a weight ratio of 95:2:3 in an N-methylpyrrolidone (NMP) solvent to prepare a positive electrode slurry. The positive electrode slurry was applied on one surface of an aluminum current collector, dried at 130 °C, and then roll-pressed to manufacture a positive electrode.
A lithium metal electrode was used as a negative electrode, and a porous polyethylene separator was interposed between the positive electrode and the negative electrode to prepare an electrode assembly, and the electrode assembly was placed inside a battery case, followed by injecting an electrolyte solution into the battery case to manufacture a half-cell. At this time, the electrolyte solution was prepared by dissolving 1.0 M of $LiPF_6$ in an organic solvent in which ethylene carbonate (EC):ethyl methyl carbonate (EMC):diethyl carbonate (DEC) were mixed at a volume ratio of 3:4:3.
Each half-cell manufactured as described above was charged to 4.45 V at 25 °C in a CC (0.1 C)-CV mode, and discharged to 2.5 V in a CC (0.1 C) mode, during which an initial charge capacity and an initial discharge capacity were measured, and an initial charge/discharge capacity, an initial efficiency, and a direct current internal resistance (DCIR) were calculated and are shown in Table 3 below. For reference, the initial efficiency value is a percentage value of the initial discharge capacity with respect to the initial charge capacity, and the DCIR value is a value calculated by dividing the difference between a voltage at 60 seconds and an initial voltage while discharging the cell with a constant current of 0.1 C.
In addition, the capacity of the lithium secondary battery was measured by repeatedly performing the charge/-discharge cycle 50 times with a 0.33 C constant current in the range of 2.5 V to 4.45 V at 45°C, and the percentage of the 50-th cycle discharge capacity with respect to the first cycle discharge capacity was set to a capacity retention rate, which is shown in Table 3 below. In addition, the percentage of DCIR, which was obtained by dividing a voltage drop ($\Delta V$) for 60 seconds in the 50-th discharge cycle by a current, with respect to DCIR, which was obtained by dividing a voltage drop ($\Delta V$) for 60 seconds in the first discharge cycle by a current, was set as a resistance increase rate, which is shown in Table 3 below.

[Table 3]

| Classifi cation | Initial discharge capacity (mAh/g) | Initial efficiency (%) | DCIR ($\Omega$) | Capacity retention rate (%) | Resistance increase rate (%) |
|---|---|---|---|---|---|
| Example 1 | 200.3 | 90.1 | 34.9 | 95.3 | 85.5 |
| Example 2 | 199.5 | 90.1 | 34.2 | 95.5 | 81.8 |
| Comparat ive Example 1 | 198.8 | 90.0 | 35.6 | 94.3 | 92.1 |
| Comparat ive Example 2 | 197.8 | 89.8 | 36.0 | 93.8 | 105.0 |

Referring to Table 1 and Table 3 above, the positive electrode active material of each of Examples 1 and 2 not only has a single particle form but also has a PDI index close to 1 and a low span value, and thus, when included in a battery, the battery is excellent in all of the capacity, initial efficiency, lifespan, and resistance performance of the battery, compared to a battery including the positive electrode active material of each of Comparative Examples 1 and 2.

**Claims**

1. A positive electrode active material comprising a lithium nickel cobalt manganese-based oxide having a nickel content of 60 mol% or greater among all transition metals, and in the form of a single particle composed of 10 or fewer primary particles,

   wherein the lithium nickel cobalt manganese-based oxide is doped with zirconium (Zr) and yttrium (Y), and has a polydispersity index (PDI) value of 1.0 to 2.0 according to Equation 1 below:

   PDI = Volume average particle diameter ($\mu$m) of primary particles /Number-average particle diameter ($\mu$m) of primary particles  [Equation 1]

2. The positive electrode active material of claim 1, wherein the lithium nickel cobalt manganese-based oxide has a composition represented by Formula 1 below:

   [Formula 1] $\quad$ $Li_{1+x}Ni_{a1}Co_{b1}Mn_{c1}Zr_{d1}Y_{e1}M_{f1}O_2$

   wherein in Formula 1 above,

   M is one or more selected from W, Cu, Sr, Mn, Ti, Mg, Mo, B, Sn, Fe, Zn, Si, and Al, and
   $-0.1 \le x \le 0.1$, $0.6 \le a1 < 1$, $0 < b1 < 0.4$, $0 < c1 < 0.4$, $0 < d1 \le 0.01$, $0 < e1 \le 0.01$, $0 \le f1 \le 0.1$, and $a1+b1+c1+d1+e1+f1=1$.

3. The positive electrode active material of claim 1, wherein the lithium nickel cobalt manganese-based oxide is doped with 1,500 ppm to 4,500 ppm of Zr, and 1,500 ppm to 4,500 ppm of Y.

4. The positive electrode active material of claim 1, wherein the primary particles have a volume average particle diameter of 2.4 $\mu$m to 3.0 $\mu$m.

5. The positive electrode active material of claim 1, wherein the primary particles have a number-average particle diameter of 1.2 $\mu$m to 3.0 $\mu$m.

6. The positive electrode active material of claim 1, wherein the positive electrode active material has a $D_{50}$ of 3.5 $\mu$m to 4.1 $\mu$m as measured by using a particle size analyzer (PSA).

7. The positive electrode active material of claim 1, wherein the primary particles have a span (($D_{v,90}$-$D_{v,10}$)/$D_{v,50}$) value of 0.9 or less.

8. The positive electrode active material of claim 1, wherein the primary particles have a $D_{v,50}$ of 2.2 $\mu$m to 3.2 $\mu$m.

9. The positive electrode active material of claim 1, wherein the positive electrode active material further comprises a coating layer formed on the lithium nickel cobalt manganese-based oxide, wherein the coating layer includes Al, W, or a combination thereof.

10. The positive electrode active material of claim 9, wherein the content of Al contained in the coating layer is 1,000 ppm to 2,000 ppm with respect to the total weight of the positive electrode active material.

11. The positive electrode active material of claim 9, wherein the content of W contained in the coating layer is 2,000 ppm to 4,000 ppm with respect to the total weight of the positive electrode active material.

12. A method for preparing a positive electrode active material, the method comprising:

    (A) mixing a composite transition metal hydroxide having a composition represented by Formula 2 below, a yttrium-containing raw material, and a lithium-containing raw material to prepare a mixture; and
    (B) under an atmospheric atmosphere, sequentially subjecting the mixture to primary firing at 750 °C to 900 °C, secondary firing at 920 °C to 1,000 °C, and then tertiary firing at 500 °C to 800 °C to prepare a fired product:

    [Formula 2] $\quad$ $Ni_{a2}Co_{b2}Mn_{c2}Zr_{d2}M'_{e2}(OH)_2$

wherein in Formula 2 above,

M' is one or more selected from W, Cu, Sr, Mn, Y, Ti, Mg, Mo, B, Sn, Fe, Zn, Si, and Al, and $0.6 \leq a2 < 1$, $0 < b2 < 0.4$, $0 < c2 < 0.4$, $0 < d2 \leq 0.01$, $0 \leq e2 \leq 0.1$, and $a2+b2+c2+d2+e2=1$.

13. The method of claim 12, wherein the primary firing is performed for 2 hours to 10 hours.

14. The method of claim 12, wherein the secondary firing is performed for 2 hours to 10 hours.

15. The method of claim 12, wherein the tertiary firing is performed for 2 hours to 10 hours.

16. The method of claim 12, further comprising (C) finely pulverizing the fired product.

17. The method of claim 16, wherein the fine pulverization is performed by vortex flow-type pulverization.

18. The method of claim 17, wherein the vortex flow-type pulverization is performed under a pressure of 2.5 bar to 5 bar.

19. The method of claim 12, further comprising (C') mixing the fired product with one or more selected from an aluminum raw material, and a tungsten raw material, and then heat-treating the mixture, thereby forming a coating layer containing one or more selected from Al and W on the fired product.

20. A positive electrode comprising the positive electrode active material according to any one of claim 1 to claim 11.

21. A lithium secondary battery comprising:

the positive electrode according to claim 20;
a negative electrode;
a separator interposed between the positive electrode and the negative electrode; and
an electrolyte.

[FIG. 1]

[FIG. 2]

Example 1

Comparative example 1

Example 2

Comparative example 2

## INTERNATIONAL SEARCH REPORT

| International application No. |
| --- |
| **PCT/KR2024/016821** |

| A. | CLASSIFICATION OF SUBJECT MATTER |
| --- | --- |

**H01M 4/525**(2010.01)i; **H01M 4/505**(2010.01)i; **H01M 4/36**(2006.01)i; **C01G 53/00**(2006.01)i; **H01M 4/131**(2010.01)i; **H01M 10/0525**(2010.01)i; **H01M 4/02**(2006.01)i

According to International Patent Classification (IPC) or to both national classification and IPC

| B. | FIELDS SEARCHED |
| --- | --- |

Minimum documentation searched (classification system followed by classification symbols)

H01M 4/525(2010.01); C01G 53/00(2006.01); H01M 10/052(2010.01); H01M 10/0525(2010.01); H01M 4/505(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 이차전지(lithium secondary battery), 양극 활물질(cathode active material), 단입자(single particle), 입경(particle size), 소성(calcination), 부피평균 입경(volume average particle size), 수평균 입경 (number average particle size), 도핑(doping), 지르코늄(zirconium, Zr), 이트륨(yttrium, Y), 코팅(coating), 소성(calcination)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | KR 10-2023-0098072 A (LG ENERGY SOLUTION, LTD.) 03 July 2023 (2023-07-03)<br>See claims 1, 6-8, 10, 14 and 15; and paragraphs [0045], [0058], [0066]-[0078], [0080], [0081], [0085], [0086], [0093], [0095]-[0104], [0113]-[0116], [0118], [0168] and [0207]-[0210]. | 1-21 |
| Y | CN 115483393 A (SUNWODA ELECTRIC VEHICLE CELL CO., LTD.) 16 December 2022 (2022-12-16)<br>See claims 1-4; and paragraphs [0005]-[0007], [0030] and [0036]. | 1-11,20,21 |
| Y | JP 2017-188444 A (NICHIA CHEM. IND. LTD.) 12 October 2017 (2017-10-12)<br>See claims 1 and 4; and paragraphs [0009], [0012], [0019], [0020], [0023]-[0025], [0027]-[0029] and [0071]. | 12-19 |
| A | KR 10-2019-0109285 A (POSTECH RESEARCH AND BUSINESS DEVELOPMENT FOUNDATION) 25 September 2019 (2019-09-25)<br>See abstract; and claims 1-12. | 1-21 |

| ✓ Further documents are listed in the continuation of Box C. | ✓ See patent family annex. |
| --- | --- |

\* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| **12 February 2025** | **12 February 2025** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
| --- |
| **PCT/KR2024/016821** |

**C.    DOCUMENTS CONSIDERED TO BE RELEVANT**

| Category* | Citation of document, with indication, where appropriate, of the relevant passages | Relevant to claim No. |
| --- | --- | --- |
| A | KR 10-2022-0035245 A (ENWAIR ENERJI TEKNOLOJILERI A. S.) 21 March 2022 (2022-03-21)<br>See abstract; and claims 1-6. | 1-21 |

Form PCT/ISA/210 (second sheet) (July 2022)

## INTERNATIONAL SEARCH REPORT
### Information on patent family members

International application No.

**PCT/KR2024/016821**

| Patent document cited in search report | | | Publication date (day/month/year) | Patent family member(s) | | | Publication date (day/month/year) |
|---|---|---|---|---|---|---|---|
| KR | 10-2023-0098072 | A | 03 July 2023 | CN | 118339677 | A | 12 July 2024 |
| | | | | EP | 4425611 | A1 | 04 September 2024 |
| | | | | JP | 2024-546664 | A | 26 December 2024 |
| | | | | KR | 10-2641896 | B1 | 29 February 2024 |
| | | | | US | 2023-0207799 | A1 | 29 June 2023 |
| | | | | WO | 2023-121389 | A1 | 29 June 2023 |
| CN | 115483393 | A | 16 December 2022 | | None | | |
| JP | 2017-188444 | A | 12 October 2017 | JP | 06-341313 | B2 | 13 June 2018 |
| | | | | JP | 2018-125305 | A | 09 August 2018 |
| | | | | JP | 2022-009263 | A | 14 January 2022 |
| | | | | JP | 2023-093583 | A | 04 July 2023 |
| | | | | JP | 6966704 | B2 | 17 November 2021 |
| | | | | JP | 7265194 | B2 | 26 April 2023 |
| | | | | US | 10224547 | B2 | 05 March 2019 |
| | | | | US | 10529986 | B2 | 07 January 2020 |
| | | | | US | 11239464 | B2 | 01 February 2022 |
| | | | | US | 11728483 | B2 | 15 August 2023 |
| | | | | US | 12176536 | B2 | 24 December 2024 |
| | | | | US | 2017-0288222 | A1 | 05 October 2017 |
| | | | | US | 2019-0157673 | A1 | 23 May 2019 |
| | | | | US | 2020-0106098 | A1 | 02 April 2020 |
| | | | | US | 2022-0112095 | A1 | 14 April 2022 |
| | | | | US | 2023-0352681 | A1 | 02 November 2023 |
| KR | 10-2019-0109285 | A | 25 September 2019 | KR | 10-2189056 | B1 | 10 December 2020 |
| | | | | US | 2021-0257613 | A1 | 19 August 2021 |
| | | | | WO | 2019-177394 | A1 | 19 September 2019 |
| KR | 10-2022-0035245 | A | 21 March 2022 | JP | 2022-542849 | A | 07 October 2022 |
| | | | | WO | 2021-015679 | A1 | 28 January 2021 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230151124